# EUROPEAN PATENT APPLICATION

(11) **EP 1 154 593 A2**
(43) Date of publication of application: **14.11.2001**
(21) Application number: 01110738.0
(22) Date of filing: 03.05.2001
(51) Int. Cl.: H04L 1/00

(54) **Adaptation of modulation to transmission conditions**

(30) Priority: 08.05.2000 JP 2000135162
(71) Applicant: MITSUBISHI DENKI KABUSHIKI KAISHA, Tokyo 100-8310 (JP)
(72) Inventor: Sugino, Yukimasa, c/o Mitsubishi Denki K.K., Tokyo 100-8310 (JP); Naito Yushi, c/o Mitsubishi Denki K.K., Tokyo 100-8310 (JP); Suzuki, Shigeaki, c/o Mitsubishi Denki K.K., Tokyo 100-8310 (JP)
(74) Representative: Pfenning, Meinig & Partner GbR

(57) **Abstract**

A transmission apparatus is capable of transmitting a high-speed modem signal. It has at least two types of transmission schemes: one uses a clear channel that can transmit a high-speed modem signal; and the other is a conventional 32-kbit/s or 40-kbit/s ADPCM scheme implemented by a coding section 25. When an ANSam signal detector (23) detects an ANSam signal according to the V.8 protocol from an input signal, a transmission assignment processor (24) instructs a BC (bear channel) bit assignment section (26) to switch the transmission scheme to the higher quality transmission scheme using the clear channel.

## Description

### BACKGROUND OF THE INVENTION

### Field of the Invention

The present invention relates to a transmission apparatus that transmits a voice frequency band signal such as a speech signal, a facsimile signal and a data-modem signal at high efficiency, and particularly to a transmission apparatus that enables highly efficient transmission between terminals such as facsimile terminals or between data terminals installing a high-speed modem based on the ITU V.34 modem standard or the like.

### ,Description of Related Art

Recently, with an increase in communication traffic volume, the need for high efficiency transmission of telephone speech signals which occupy most of the traffic has been intensifying. In response to the need, digital circuit multiplication equipment (DCME) is brought into practical use.

The DCME is an apparatus for improving transmission efficiency of telephone speech signals by combining a digital speech interpolation (DSI) technique with a low bit rate speech coding technique. The DSI improves the transmission efficiency of the telephone speech signals by transmitting only speech burst portions of telephone conversations considering that a speech activity ratio is usually less than 40%. On the other hand, the low bit rate speech coding technique encodes the speech signals using the number of bits less than the conventional PCM (Pulse Code Modulation).

For example, the DCME using the adaptive differential pulse code modulation (ADPCM) as a speech coding scheme can achieve transmission efficiency about five times greater than the speech signal transmission using the conventional 64-kbit/s PCM coding scheme.

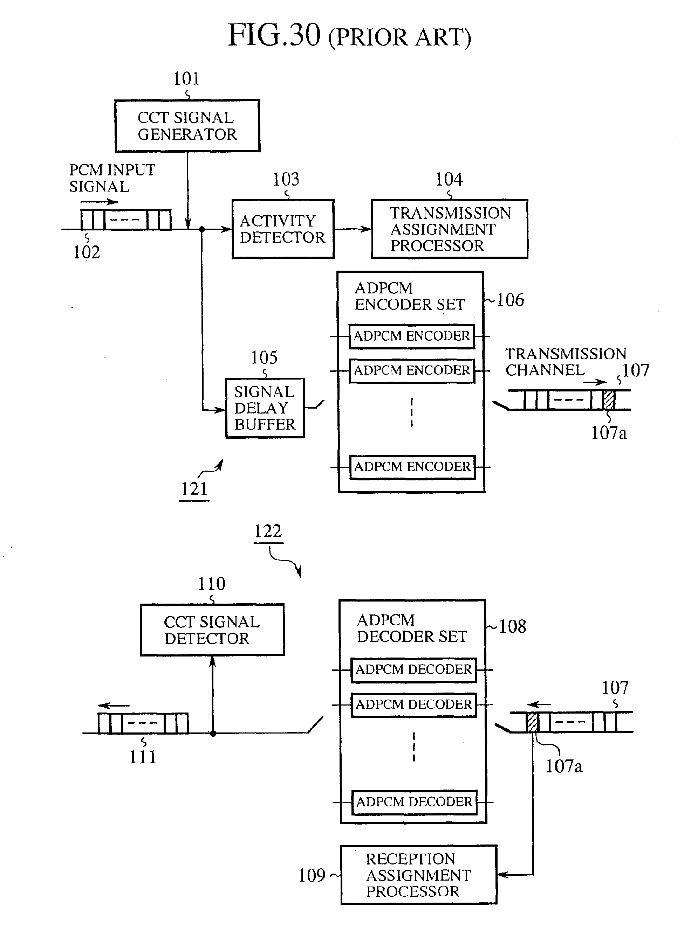

Fig. 30 is a block diagram showing a configuration of a conventional transmission apparatus constituting the DCME utilizing the ADPCM scheme, which is disclosed in Japanese patent application laid-open No.1-144735/1999, for example.

In this figure, the reference numeral 121 designates a transmitting-side apparatus comprising a CCT signal generator 101, an activity detector 103, a transmission assignment processor 104, a signal delay buffer 105 and an ADPCM encoder set 106.

The CCT signal generator 101 generates a channel check test (CCT) signal to be superimposed on a PCM input signal. The reference numeral 102 designates a transmitting side terrestrial channel. The activity detector 103 makes a decision as to whether the PCM input signal is in an active state or not. The transmission assignment processor 104 assigns the speech bursts to transmission channels 107, and the signal delay buffer 105 temporarily holds the PCM input signal. The ADPCM encoder set 106 includes a predetermined number of ADPCM encoders for coding the PCM input signal according to the ADPCM scheme.

The transmitting side and receiving side transmission channels 107 transmit 32-kbit/s ADPCM signals (signals coded by the ADPCM scheme).

The reference numeral 122 designates a receiving-side apparatus comprising an ADPCM decoder set 108, a reception assignment processor 109 and a CCT signal detector 110.

The ADPCM decoder set 108 includes a predetermined number of ADPCM decoders for decoding the ADPCM signals to original PCM signals. The reception assignment processor 109 controls the connection between the receiving side transmission channels 107 and the ADPCM decoders, and the connection between the ADPCM decoders and receiving side terrestrial channels 111. The CCT signal detector 110 detects the CCT signal from the decoded signals, and the terrestrial channels 111 are receiving side channels.

Next, the operation of the conventional DCME will be described.

First, the operation of the transmitting-side apparatus 121 will be described.

It receives 64-kbit/s PCM input signals from the terrestrial channels 102. The activity detector 103 decides whether each PCM input signal is in the active state or not, and supplies its decision result to the transmission assignment processor 104.

In response to the decision result, the transmission assignment processor 104 assigns the speech bursts of the PCM input signal to available ADPCM encoders in the ADPCM encoder set 106 and the available transmission channels 107.

Then, the signals encoded by the ADPCM encoders according to the 32-kbit/s ADPCM scheme are transmitted through the transmission channels 107 to which they are assigned.

As for the assignment, the transmission assignment processor 104 assigns the speech bursts of the PCM input signal in chronological order. In the transmission channels 107, at most two of them are secured in a two-millisecond frame, and information about the relationships of their connections (correspondence between the terrestrial channels and the transmission channels) is sent to the opposite side equipment as an assignment message through an assignment channel 107a in the transmission channels 107.

Next, the operation of the receiving-side apparatus 122 will be described.

The receiving-side apparatus 122 receives the signals transmitted from the opposite side equipment through the receiving side transmission channels 107.

In the course of this, receiving the assignment message transmitted via the assignment channel 107a, the reception assignment processor 109 assigns available ADPCM decoders in the ADPCM decoder set 108 to the terrestrial channels 111 allowing connection update, and connects the transmission channels 107 to the ADPCM decoders to supply the received signals to the ADPCM decoders.

Then, the ADPCM decoders decode the received signals into the original PCM signal to be supplied to the terrestrial channel 111.

Both the CCT signal generator 101 and CCT signal detector 110 conduct the channel check test by transmitting and receiving the CCT signal via the transmission channels 107, thereby automatically check whether the various sections of the DCME operate normally or not.

As described above, the transmission and reception of the PCM signals are carried out between the equipment and the opposite side equipment with a similar configuration.

The foregoing conventional transmission apparatus can achieve highly efficient transmission of the speech signals because it employs the 32-kbit/s ADPCM scheme as a coding scheme. However, it is difficult for the transmission apparatus, for example, to transmit the V.29 9600 bit/s modem signal output from a facsimile terminal. To solve this problem, a system is often used which includes a speech/data discriminator for deciding as to whether the type of the PCM input signal is "speech" or "data", and which uses a 32-kbit/s ADPCM scheme when the input signal is a speech signal, and a higher quality 40-kbit/s ADPCM scheme when it is a data signal.

On the other hand, with an increase in the transmission rate, there are developed facsimile modems not only according to the existing modem standards specified by the ITU (International Telecommunication Union) recommendations V.17, V.29 and V.27ter with a data bit rate equal to or less than 14.4 kbit/s, but also according to the ITU V.34 modem standard with the data bit rate of 28.8 kbit/s. Likewise, as for the modems, to meet the need for a higher transmission rate, high-speed modems based on the ITU recommendation V.90 modem standard have been developed.

As other conventional transmission apparatuses, there are those disclosed in Japanese patent application laid-open Nos. 10-285375/1998, 10-290346/1998, 10-304172/1998, 11-41433/1999, 11-88650/1999, 11-112759/1999 and 11-146170/1999.

With the foregoing configuration, the conventional transmission apparatus has a problem in that it is difficult even for the 40-kbit/s ADPCM scheme to transmit the above-described high-speed modem signals normally.

### SUMMARY OF THE INVENTION

The present invention is implemented to solve the foregoing problem. It is therefore an object of the present invention to provide a transmission apparatus capable of normally transmitting, in addition to a speech signal, a modem signal that is transmitted by a facsimile terminal or a data terminal that installs a high-speed modem based on the ITU V.34 modem standard. This is implemented by preparing, in addition to the conventional 32-kbit/s or 40-kbit/s ADPCM scheme, a higher quality transmission scheme such as a coding scheme or clear channel transmission scheme that can transmit a high-speed modem signal normally, so that when a specified signal is detected from the input signal in a prescribed startup procedure such as V.8 procedure or V.8bis procedure, switching is made to the higher quality transmission scheme among these schemes.

According to one aspect of the present invention, there is provided a transmission apparatus comprising: specified signal detecting means for detecting a specified signal according to one of V.8 protocol and V.8bis protocol from an input signal consisting of one of a speech signal and a voice band data signal; and transmitting means for transmitting the input signal to opposite side equipment as a transmission signal via a transmission line such that the transmission signal has different quality depending on whether the specified signal detecting means detects the specified signal or not.

Here, the specified signal detecting means may consist of an ANSam signal detector for detecting an ANSam signal in a prescribed startup procedure.

The specified signal detecting means may consist of a V.21 channel No.1 detector for detecting a V.21 channel No.1 modem signal in a prescribed startup procedure.

The transmission apparatus may further comprise first tone signal detecting means for detecting an unmodulated 2100 Hz tone signal from the input signal, wherein the transmitting means may inhibit, when the first tone signal detecting means detects the unmodulated 2100 Hz tone signal, the transmission signal from being transmitted in a quality in which the transmitting means transmits the transmission signal when the specified signal detecting means detects the specified signal.

The transmission apparatus may further comprise coding means for coding the input signal consisting of one of the speech signal and voice band data signal in a predetermined coding mode, wherein the transmitting means may transmit the input signal as the transmission signal with maintaining the quality of the input signal when the specified signal detecting means detects the specified signal, and transmit a signal coded by the coding means in a predetermined quality as the transmission signal when the specified signal detecting means does not detect the specified signal.

The transmission apparatus may further comprise first coding means for coding the input signal consisting of one of the speech signal and the voice band data signal in a coding mode of a predetermined first quality; and second coding means for coding the input signal in a coding mode of a second quality lower than the first quality, wherein the transmitting means may transmit a signal coded by the first coding means as the transmission signal when the specified signal detecting means detects the specified signal, and transmit a signal coded by the second coding means as the transmission signal when the specified signal detecting means does not detect the specified signal.

The transmission apparatus may further comprise a receiving-side apparatus for receiving a transmission signal from the opposite side equipment, and for converting the transmission signal into an original input signal to be output as an output signal, wherein the specified signal detecting means and the transmitting means may constitute a transmitting-side apparatus.

The transmission apparatus may further comprise message transmitting means for transmitting to the opposite side equipment a message indicating a request for switching the quality of the transmission signal; and message receiving means for receiving from the opposite side equipment a message indicating a request for switching the quality of the transmission signal, wherein the transmitting means may switch, when the message receiving means receives the message, the quality of the transmission signal to be sent to the opposite side equipment into the quality specified by the message.

The transmission apparatus may further comprise detected information transmitting means for detecting the specified signal, and for transmitting detected information to the opposite side equipment when the specified signal is detected; and detected information receiving means for receiving corresponding detected information from the opposite side equipment, wherein the transmitting means may switch the quality of the transmission signal to be sent to the opposite side equipment, when the detected information receiving means receives the detected information.

The transmission apparatus may further comprise an activity detector for detecting that the channel of the input signal is brought into an inactive state, wherein when the activity detector detects that the channel of the input signal enters the inactive state after the specified signal detecting means detects the specified signal in the input signal, the transmitting means may switch the quality of a channel of the transmission signal, which corresponds to the channel of the input signal.

The transmission apparatus may further comprise a first activity detector for detecting that the channel of the input signal is brought into an inactive state, and a second activity detector for detecting that a channel of the transmission signal sent from the opposite side equipment is brought into an inactive state, the channel of the transmission signal corresponding to the channel of the input signal, wherein when both the first activity detector and the second activity detector detect the inactive state after the specified signal detecting means detects the specified signal in the input signal, the transmitting means may switch the quality of a channel of the transmission signal, which corresponds to the channel of the input signal.

The transmission apparatus may further comprise disconnect detecting means for detecting a disconnect, wherein when the disconnect detecting means detects the disconnect after the specified signal detecting means detects the specified signal in the input signal and the transmitting means switches the quality of the transmission signal that corresponds to the channel of the input signal into the quality in which the transmission signal is transmitted when the specified signal is detected, the transmitting means may switch the quality of the transmission signal into the quality in which the transmission signal is transmitted when the specified signal is not detected.

The disconnect detecting means may make a decision that it detects the disconnect when the channel of the input signal continues the inactive state for more than a predetermined time period.

The disconnect detecting means may make a decision that it detects the disconnect when the channel of the input signal continues the inactive state for more than a predetermined time period, and when the transmission signal from the opposite side equipment corresponding to the channel of the input signal is in the inactive state.

The disconnect detecting means may detect the disconnect by monitoring a transmission and reception protocol of one of a facsimile signal and a data-modem signal received as the input signal, and one of a facsimile signal and a data-modem signal received from the opposite side equipment as the transmission signal corresponding to the input signal.

The receiving-side apparatus may further comprise specified signal detecting means for detecting a specified signal in a prescribed startup procedure from an output signal of the receiving-side apparatus.

The transmitting means may transmit the input signal consisting of a facsimile signal from a calling side to a called side to the opposite side equipment in a predetermined first quality, and transmit the facsimile signal from the called side to the calling side to the opposite side equipment at a second quality lower than the first quality.

The transmission apparatus may further comprise new call connection detecting means for detecting a new call connection, wherein when the new call connection detecting means detects the new call connection after the specified signal detecting means detects the specified signal in the input signal and the transmitting means switches the quality of the transmission signal corresponding to the channel of the input signal into the quality in which the transmission signal is transmitted when the specified signal is detected, the transmitting means may switch the quality of the transmission signal into the quality in which the transmission signal is transmitted when the specified signal is not detected.

The new call connection detecting means may comprise second tone signal detecting means for detecting from the input signal a tone signal of a specified frequency used for a channel continuity test, and make a decision that it detects the new call connection when the second tone signal detecting means detects the tone signal.

The new call connection detecting means may comprise third tone signal detecting means for detecting one of a CNG signal and a CED signal from the input signal, and make a decision that it detects the new call connection when the third tone signal detecting means detects one of the CNG signal and the CED signal.

The new call connection detecting means may comprise fourth tone signal detecting means for detecting from the input signal a tone signal of a specified frequency based on No.5 signaling, and make a decision that it detects one of the new call connection and disconnect when the fourth tone signal detecting means detects the tone signal.

The transmitting means may comprise a cell assembler for assembling the input signal into an ATM cell to be transmitted as the transmission signal when the specified signal detecting means detects the specified signal.

The transmitting means may comprise an IP packet assembler for assembling the input signal into an IP packet to be transmitted as the transmission signal when the specified signal detecting means detects the specified signal.

The transmitting means may comprise a cell assembler for assembling the input signal into an ATM cell to be transmitted as the transmission signal.

The transmitting means may comprise an IP packet assembler for assembling the input signal into an IP packet to be transmitted as the transmission signal.

### BRIEF DESCRIP TION OF THE DRAWINGS

Fig. 1 is a block diagram showing an example of a transmission system configured by opposing two transmission apparatuses of an embodiment 1 in accordance with the present invention;
Fig. 2 is a block diagram showing a configuration of the transmission apparatus of the embodiment 1 in accordance with the present invention;
Fig. 3 is a flowchart illustrating the operation of the transmission assignment processor in the transmission apparatus of the embodiment 1;
Fig. 4 is a flowchart illustrating the detail of a coding mode switching decision (1) in Fig. 3;
Fig. 5 is a flowchart illustrating the detail of a coding mode switching decision (2) in Fig. 3;
Fig. 6 is a flowchart illustrating the operation of the reception assignment processor in the transmission apparatus of the embodiment 1;
Fig. 7 is a diagram showing an example of a facsimile signal sequence according to the ITU V.17 or slower protocol;
Fig. 8 is a block diagram showing an example of a facsimile signal sequence according to the ITU V.34 protocol;
Fig. 9 is a block diagram showing a configuration of the transmission apparatus of an embodiment 2 in accordance with the present invention;
Fig. 10 is a flowchart illustrating the detail of the coding mode switching decision (2) by the transmission assignment processor in the transmitting-side apparatus of the embodiment 2;
Fig. 11 is a flowchart illustrating the operation of the reception assignment processor in the transmission apparatus of the embodiment 2;
Fig. 12 is a block diagram showing a configuration of the transmission apparatus of an embodiment 3 in accordance with the present invention;
Fig. 13 is a flowchart illustrating the detail of the coding mode switching decision (2) by the transmission assignment processor in the transmitting-side apparatus of the embodiment 3;
Fig. 14 is a flowchart illustrating the operation of the reception assignment processor in the transmission apparatus of the embodiment 3;
Fig. 15 is a block diagram showing a configuration of the transmission apparatus of an embodiment 4 in accordance with the present invention;
Fig. 16 is a flowchart illustrating the detail of the coding mode switching decision (2) by the transmission assignment processor in the transmitting-side apparatus of the embodiment 4;
Fig. 17 is a block diagram showing a configuration of the transmission apparatus of an embodiment 5 in accordance with the present invention;
Fig. 18 is a flowchart illustrating the detail of the coding mode switching decision (1) by the transmission assignment processor in the transmitting-side apparatus of the embodiment 5;
Fig. 19 is a flowchart illustrating the detail of the coding mode switching decision (2) by the transmission assignment processor in the transmitting-side apparatus of the embodiment 5;
Fig. 20 is a block diagram showing a configuration of the transmission apparatus of an embodiment 6 in accordance with the present invention;
Fig. 21 is a flowchart illustrating the operation of the transmission assignment processor in the transmission apparatus of the embodiment 6;
Fig. 22 is a flowchart illustrating the detail of the coding mode switching decision (2) in Fig. 21;
Fig. 23 is a flowchart illustrating the operation of the reception assignment processor in the transmission apparatus of the embodiment 6;
Fig. 24 is a block diagram showing a configuration of the transmission apparatus of an embodiment 7 in accordance with the present invention;
Fig. 25 is a flowchart illustrating the detail of the coding mode switching decision (2) by the transmission assignment processor in the transmitting-side apparatus of the embodiment 7;
Fig. 26 is a block diagram showing a configuration of the transmission apparatus of an embodiment 12 in accordance with the present invention;
Fig. 27 is a block diagram showing a configuration of the transmission apparatus of an embodiment 13 in accordance with the present invention;
Fig. 28 is a block diagram showing a configuration of the transmission apparatus of an embodiment 14 in accordance with the present invention;
Fig. 29 is a block diagram showing a configuration of the transmission apparatus of an embodiment 15 in accordance with the present invention; and
Fig. 30 is a is a block diagram showing a configuration of a conventional transmission apparatus.

### DETAILED DESCRIP TION OF THE PREFERRED EMBODIMENTS

The invention will now be described with reference to the accompanying drawings.

### EMBODIMENT 1

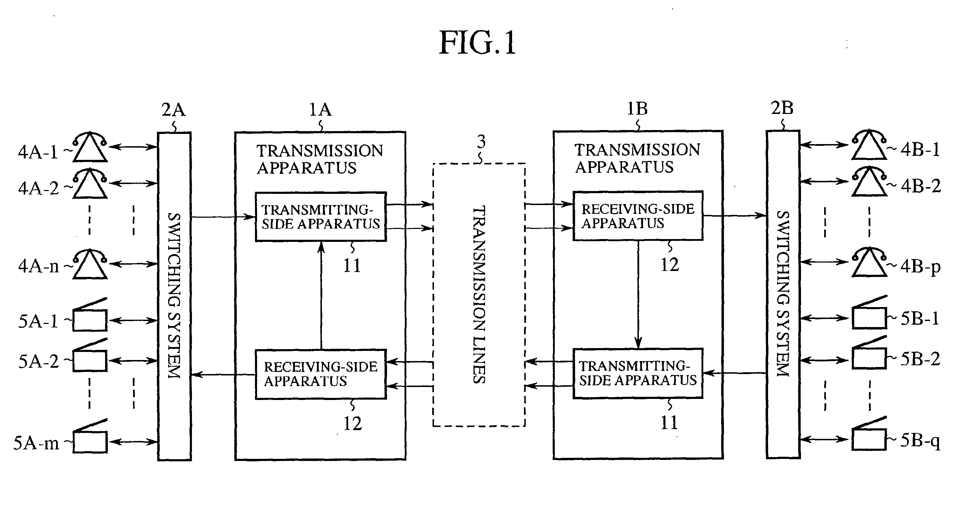

Two transmission apparatuses of an embodiment 1 in accordance with the present invention are placed in opposition to each other across transmission lines in a transmission system. Fig. 1 is a block diagram showing an example of a transmission system configured by opposing two transmission apparatuses of the embodiment 1 in accordance with the present invention.

In Fig. 1, reference numerals 1A and 1B each designates a transmission apparatus in accordance with the present embodiment 1. Each of them comprises a transmitting-side apparatus 11 and a receiving-side apparatus 12. The transmitting-side apparatus 11 generates a transmission signal from an input signal such as a speech signal or a voice band data signal fed from the trunk side (terrestrial side), and supplies the transmission signal to the transmission lines 3. On the other hand, the receiving-side apparatus 12, receiving transmission signals from the transmission lines 3, converts them to an original speech signal or a voice band data signal, and supplies it to the trunk side as an output signal. In this case, the transmission apparatus 1A is the opposite side equipment of the transmission apparatus 1B, and vice versa.

The reference numeral 2A designates a switching system that is connected to the trunk side of the transmission apparatus 1A as well as to telephone sets 4A-1 - 4A-n and facsimile terminals 5A-1 - 5A-m to carry out circuit switching; and 2B designates a switching system that is connected to the trunk side of the transmission apparatus 1B as well as to telephone sets 4B-1-4B-p and facsimile terminals 5B-1 - 5B-q to carry out circuit switching.

The reference numeral 3 designates transmission lines like bearer lines such as satellite or submarine cable circuits for connecting the transmission apparatuses 1A and 1B.

Reference numerals 4A-1 - 4A-n designate n telephone sets connected to the switching system 2A; 4B-1 - 4B-p designate p telephone sets connected to the switching system 2B; 5A-1 - 5A-m designate m facsimile terminals connected to the switching system 2A; and 5B-1 - 5B-q designate q facsimile terminals connected to the switching system 2B.

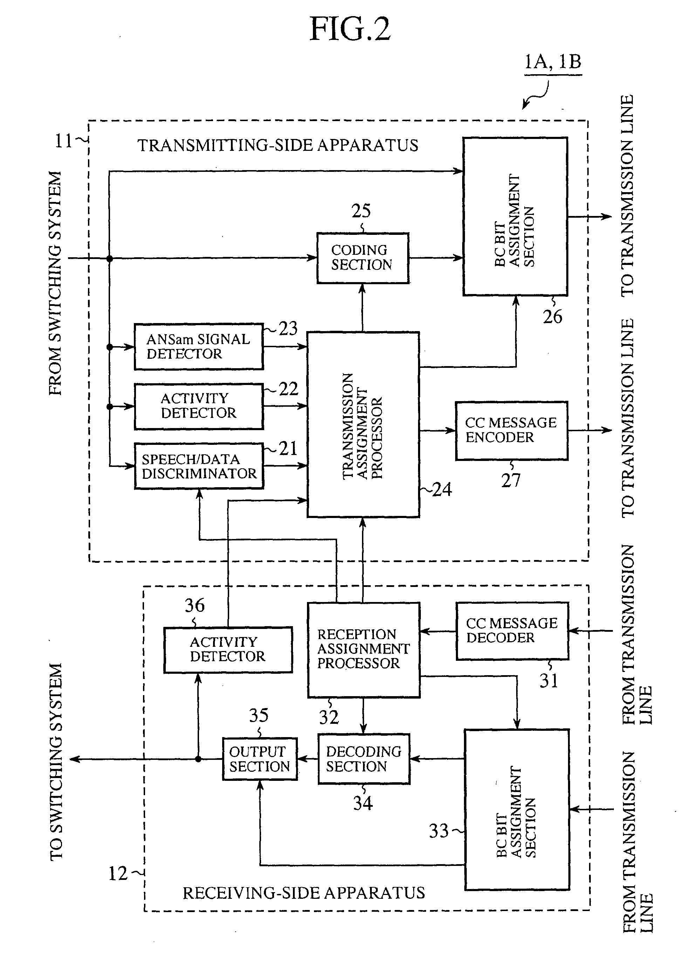

Fig. 2 is a block diagram showing a configuration of the transmission apparatus 1A or 1B of the present embodiment 1. In the transmitting-side apparatus 11 as shown in Fig. 2, the reference numeral 21 designates a speech/data discriminator for determining whether the input signal on each channel is a speech signal or voice band data signal; 22 designates an activity detector for detecting whether the input signal on each channel is in an active state or inactive state; and 23 designates an ANSam signal detector for detecting an ANSam signal specified by the ITU recommendation V.8 from the input signal on each channel.

The reference numeral 24 designates a transmission assignment processor for controlling assignment between each channel of the input signals and the encoders in the coding section 25 and the channels on the transmission lines 3. The reference numeral 25 designates the coding section including a predetermined number of encoders; 26 designates a bearer channel (BC) bit assignment section for assigning the input signal channel or the encoders of the coding section 25 to available channels on the transmission lines 3, and for transmitting the input signal on the channel itself or the coded signals to the opposite side equipment as the transmission signal; and 27 designates a control channel (CC) message encoder for transmitting information about the assignment of the channels of the trunk side signals (input signals in the transmitting-side apparatus 11) and the channels of the transmission signals as a CC message.

In the receiving-side apparatus 12, the reference numeral 31 designates a CC message decoder for receiving a CC message from the opposite side equipment, and for extracting from the CC message the assignment information about the channels of the trunk side signals (output signals in the receiving-side apparatus 12) and the channels of the transmission signals; and 32 designates a reception assignment processor for controlling assignment of the channel of the transmission signals and decoders in a decoding section 34 and the channels of the output signals. The reference numeral 33 designates a BC bit assignment section for supplying the transmission signals on the channels to the decoders in the decoding section 34 or for outputting the transmission signals without change in response to an assignment indication from the reception assignment processor 32; 34 designates the decoding section including a predetermined number of decoders; 35 designates an output section for outputting the signals from the BC bit assignment section 33 and the signals from the decoding section 34 simply as the output signals; and 36 designates an activity detector for determining whether each channel of the output signals is in the active state or inactive state.

Next, the operation of the present embodiment 1 will be described.

First, the transmission of the speech signal or voice band data signal in the transmission system as shown in Fig. 1 will be described.

The speech signal or voice band data signal from one of the telephone sets 4A-1 - 4A-n and facsimile terminals 5A-1 - 5A-m is supplied to the transmission apparatus 1A via the switching system 2A as a single channel input signal. After carrying out processing such as speech coding and silence elimination of the input signal on each channel, the transmitting-side apparatus 11 of the transmission apparatus 1A supplies the signals passing through the processing to the transmission lines 3 as the transmission signals on individual channels, and outputs the CC message as well.

The transmission signals and the CC message from the transmission apparatus 1A are transmitted to the opposite side equipment, the transmission apparatus 1B, through the transmission lines 3 such as the satellite or submarine cable circuits to be received by the receiving-side apparatus 12 of the transmission apparatus 1B. After carrying out the processing such as speech decoding of the transmission signals on the channels in response to the contents of the CC message, the receiving-side apparatus 12 of the transmission apparatus 1B supplies the signals passing through the processing to the switching system 2B as the output signals on the individual channel. The output signals on the individual channels are each delivered to one of the telephone sets 4B-1 - 4B-p and facsimile terminals 5B-1 - 5B-q through the switching system 2B.

Likewise, the speech signal or voice band data signal from one of the telephone sets 4B-1 - 4B-p and facsimile terminals 5B-1 - 5B-q is supplied to the transmission apparatus 1B via the switching system 2B as a single channel input signal. After carrying out the processing such as speech coding and silence elimination of the input signals on the individual channels, the transmitting-side apparatus 11 of the transmission apparatus 1B supplies the signals passing through the processing to the transmission lines 3 as the transmission signals on the individual channels, and outputs the CC message as well.

The transmission signals and the CC message from the transmission apparatus 1B are transmitted to the opposite side equipment, the transmission apparatus 1A, through the transmission lines 3 such as the satellite or submarine cable circuits to be received by the receiving-side apparatus 12 of the transmission apparatus 1A. After carrying out the processing such as speech decoding of the transmission signals on the individual channels in response to the contents of the CC message, the receiving-side apparatus 12 of the transmission apparatus 1A supplies the signals passing through the processing to the switching system 2A as the output signals to the individual channels. The output signals on the channels are each delivered to one of the telephone sets 4A-1 - 4A-n and facsimile terminals 5A-1 - 5A-m through the switching system 2A.

In this way, the transmission processing for the individual channels is carried out in both transmitting and receiving directions. Since the input signals and output signals are usually multiplexed by the switching systems 2A and 2B, the transmission processing is carried out with the multiple channels.

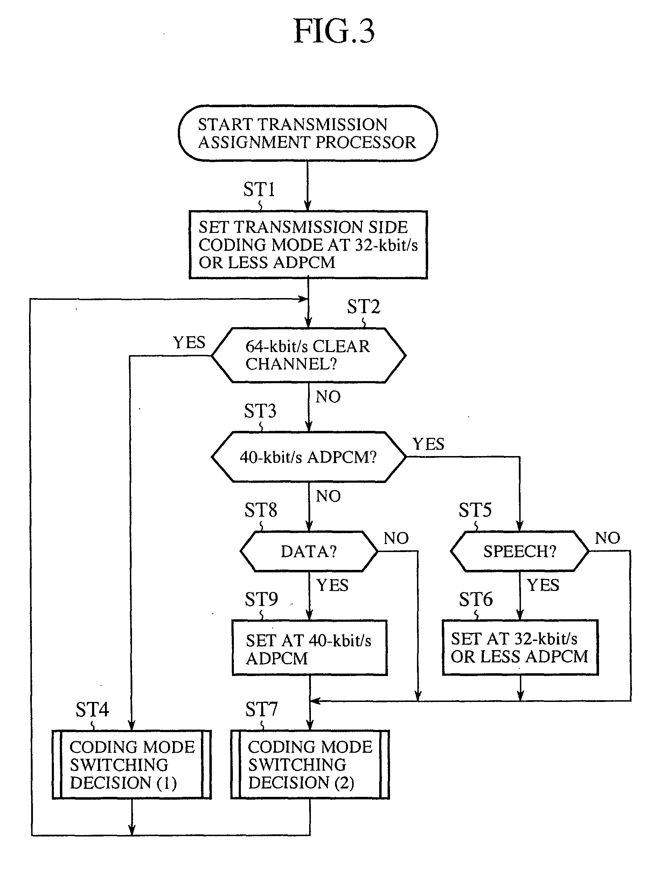

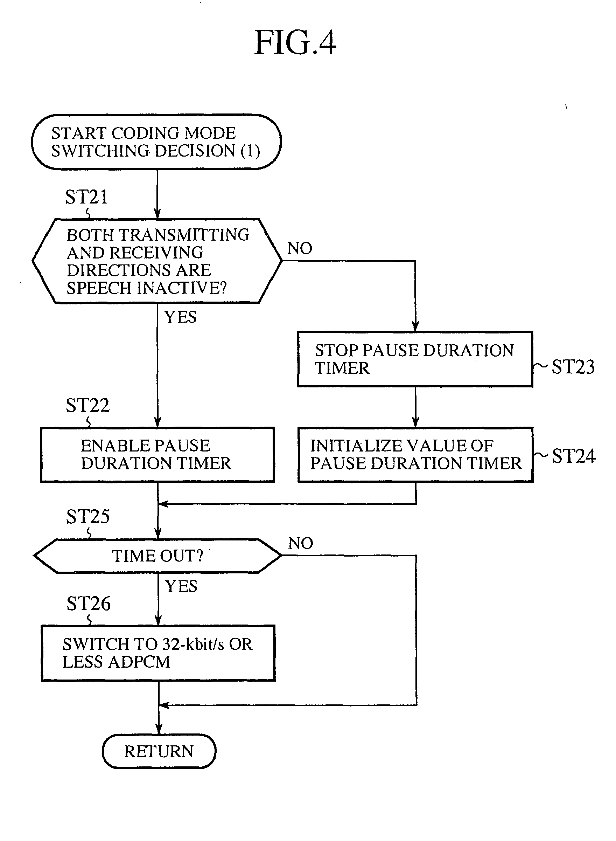

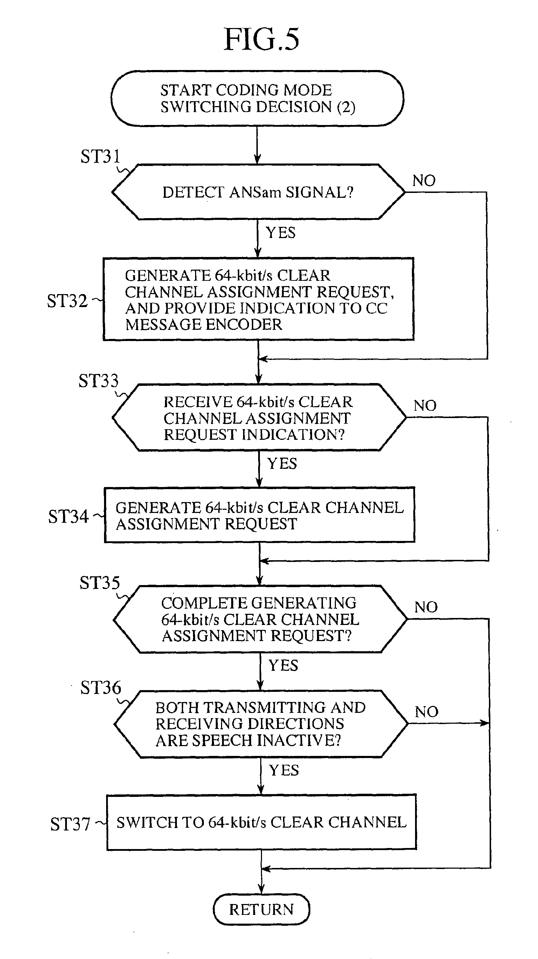

Next, the operation of the transmitting-side apparatus 11 will be described. Fig. 3 is a flowchart illustrating the operation of the transmission assignment processor 24 in the present embodiment 1; Fig. 4 is a flowchart illustrating the detail of the coding mode switching decision (1) in Fig. 3; and Fig. 5 is a flowchart illustrating the detail of the coding mode switching decision (2) in Fig. 3.

The input signal from the switching system 2A or 2B, which consists of multiplexed telephone line signals on a plurality of channels from the trunk side, is supplied to the speech/data discriminator 21, activity detector 22, ANSam signal detector 23, coding section 25 and BC bit assignment section 26 in the transmitting-side apparatus 11.

The speech/data discriminator 21 makes a decision as to whether the input signal on each channel is a speech signal or a voice band data signal by analyzing the input signal, and supplies the decision results to the transmission assignment processor 24.

The speech/data discriminator 21 makes the decision in the same manner as the speech/data discriminator disclosed in Japanese patent application laid-open No.3-250961/1991, which decides as to whether it is the speech signal or voice band data signal from the zero crossing number (the number of crossings of the signal level across the zero level per unit time) and the power of the input signal and their temporal fluctuations. The discrimination algorithm of the speech/data discriminator 21 is not limited to the above, but other methods can be applied such as an algorithm based on the frequency analysis of the input signal.

The speech/data discriminator 21 also detects from each channel of the input signal, the 2100 Hz tone signal transmitted from a facsimile modem or data modem. When detecting the 2100 Hz tone signal, the speech/data discriminator 21 decides that the signal of the channel is the voice band data signal.

In addition, the speech/data discriminator 21 captures, from the reception assignment processor 32, the type information about the individual channels of the transmission signals from the opposite side equipment to the receiving-side apparatus 12, and makes a decision, when the signal type on one of the channels changes from "speech" to "data", that the signal on the channel of the input signal corresponding to the one of the channels is a voice band data signal.

On the other hand, the activity detector 22, analyzing the input signal supplied, makes a decision as to whether each channel of the input signals is in the active state or inactive state, and supplies the decision results to the transmission assignment processor 24.

Here, the activity detector 22 decides the active state or inactive state in accordance with the intensity of the input signal. The decision method, however, is not limited to this. It can make a decision by concurrent use of other criteria such as the zero crossing number of the input signal.

The ANSam signal detector 23, analyzing the input signal supplied, makes a decision as to the presence or absence of the ANSam signal (modified answer tone) for each channel of the input signals specified in the ITU recommendation V.8, and supplies the decision results to the transmission assignment processor 24. Here, the ANSam signal is a signal transmitted from the facsimile terminals 5A-1 - 5A-m and 5B-1 - 5B-q, a signal generated by amplitude modulating a 2100 Hz tone signal by a 15 Hz sinusoidal signal.

Here, the ANSam signal detector 23 monitors the signal intensity of the 2100 Hz frequency component and the temporal variations in the signal intensity involved in the amplitude modulation, and makes a decision that it detects the ANSam signal when the signal intensity of the 2100 Hz frequency component is greater than a predetermined value, and the temporal variations in the signal intensity is greater than a predetermined value.

In response to the decision results supplied from the speech/data discriminator 21, activity detector 22 and ANSam signal detector 23, the transmission assignment processor 24 decides the assignment of each channel of the input signals, and that of the encoders in the coding section 25 and the channels of the transmission lines 3, and supplies the assignment relationships to the coding section 25 and BC bit assignment section 26.

As for the channels that carry out the V.34 modem transmission, however, the transmission assignment processor 24 does not assign them to the encoders, but assigns the signals of the channels directly to available channels among the channels of the transmission signals without change, as a 64-kbit/s clear channel. In this case, the transmission assignment processor 24 makes a decision as to whether the modem transmission based on the ITU recommendation V.34 modem standard (the V.34 modem transmission) is carried out or not in accordance with the decision result from the ANSam signal detector 23, or with the 64-kbit/s clear channel assignment request indication that is transmitted from the opposite side equipment and received by the CC message decoder 31, and is supplied through the reception assignment processor 32.

On the other hand, as for a channel which is not carrying out the V.34 modem transmission among the channels of the input signals, and on which the activity detector 22 makes a decision that it is in the active state, it is assigned to one of available encoders in the coding section 25, and the output of the encoder is assigned to one or more available channels of the transmission signals. In response to the decision result fed from the speech/data discriminator 21 and the ratio of the vacant channels of the transmission signals, the transmission assignment processor 24 decides the coding scheme and coding bit rate used by the encoder, and notifies the coding section 25 of the decided coding scheme and coding bit rate.

Incidentally, the encoders in the coding section 25 employ the 40-kbit/s, 32-kbit/s, 24 kbit/s, or 16-kbit/s ADPCM scheme specified by the ITU recommendation G. 726. Thus, when a decision is made that the signal type is a voice band data signal, the transmission assignment processor 24 designates the coding bit rate at 40-kbit/s to reduce the transmission error of the modem signal on the channel, thereby improving the quality of the transmission signal. On the other hand, when a decision is made that the signal type is the speech signal, the transmission assignment processor 24 designates one of the 32-kbit/s, 24-kbit/s and 16-kbit/s coding bit rates to reduce the bit rate, thereby improving the transmission line efficiency. Which one of the 32-kbit/s, 24-kbit/s and 16-kbit/s is to be used for the speech signal is determined in accordance with the number of vacant channels for the transmission signals. When there are sufficient vacant channels for the transmission signals, the 32-kbit/s coding bit rate is selected, and as the number of the vacant channels for the transmission signals decreases, the coding bit rate is gradually reduced such as 24 kbit/s or 16 kbit/s.

In response to the activity decision result fed from the activity detector 36 in the receiving-side apparatus 12, and to the activity decision result fed from the activity detector 22 in the transmitting-side apparatus 11, the transmission assignment processor 24 detects the end of the call from the signal states of the pair of the transmission and reception channels (that is, the input signal channel and the output signal channel of the same terminal). When the inactive states in both directions continue for more than a predetermined time period in the 64-kbit/s clear channels, the transmission assignment processor 24 decides that the call terminates, and switches the channels from the 64-kbit/s clear channels to coded channels by the ADPCM scheme coding.

The operation of the transmission assignment processor 24 will now be described in more detail with reference to the flowcharts of Figs. 3-5. Here, the description will be omitted of the assignment control of the channels of the input signals to the encoders in the coding section 25 and to the channels of the transmission signals in response to the decision result of the activity detector 22, but the operation of the coding mode switching control in accordance with the discrimination state of the input signal will be described. As for the control of the coding bit rate in response to the number of vacant channels of the transmission signals, its description is omitted for simplicity's sake, and the 32-kbit/s, 24-kbit/s or 16-kbit/s ADPCM scheme is handled in terms of the 32-kbit/s or less ADPCM scheme. However, it is obvious that their coding bit rate can be controlled.

First, the transmission assignment processor 24 provides the coding section 25 with the indication of the coding mode according to the 32-kbit/s or less ADPCM scheme to place the quality of the transmission signal in the initial state (step ST1).

Subsequently, the transmission assignment processor 24 makes a decision as to whether the individual channels of the transmission signals are a 64-kbit/s clear channel, a coded channel according to the 40-kbit/s ADPCM scheme or a coded channel according the 32-kbit/s or less ADPCM scheme (steps ST2 and ST3).

As for the 64-kbit/s clear channel, the transmission assignment processor 24 carries out the coding mode switching decision (1) which will be described later (step ST4).

On the other hand, as for the coded channel according to the 40-kbit/s ADPCM scheme, the transmission assignment processor 24 makes a decision as to whether the signal of the channel is a speech signal or not by the decision result fed from the speech/data discriminator 21 (step ST5). When the signal of the channel is the speech signal, it switches the channel to the coded channel according to the 32-kbit/s or less ADPCM scheme (step ST6). Afterward, the transmission assignment processor 24 carries out the coding mode switching decision (2) which will be described later (step ST7).

As for the coded channel according to the 32-kbit/s or less ADPCM scheme, the transmission assignment processor 24 makes a decision as to whether the signal of the channel is a voice band data signal or not by the decision result fed from the speech/data discriminator 21 (step ST8). When the signal of the channel is the voice band data signal, it switches the channel to the coded channel according to the 40-kbit/s ADPCM scheme (step ST9). Afterward, the transmission assignment processor 24 carries out the coding mode switching decision (2) which will be described later (step ST7).

Subsequently, after carrying out the coding mode switching decision (1) or the coding mode switching decision (2), the transmission assignment processor 24 returns to step ST2, thereby iterating the processing from step ST2 to step ST9.

Next, referring to Fig. 4, the coding mode switching decision (1) as to the 64-kbit/s clear channel will be described.

In the coding mode switching decision (1), the transmission assignment processor 24 makes a decision for each channel as to whether both the transmitting and receiving directions are in the inactive state or not (step ST21) by the activity decision result in the transmitting direction fed from the activity detector 22 and by the activity decision result in the receiving direction fed from the activity detector 36 in the receiving-side apparatus 12. When both the directions are in the inactive state, the transmission assignment processor 24 enables an internal pause duration timer not shown (step ST22). On the other hand, when at least one of the directions is in the active state, the transmission assignment processor 24 stops the pause duration timer (step ST23), and initializes its value (step ST24).

Then, the transmission assignment processor 24 makes a decision as to whether the pause duration timer exceeds a predetermined time period (step ST25). When it exceeds the predetermined time period, that is, when the inactive state continues for more than the predetermined time period, it decides that the call of the channel terminates, and switches the channel to its initial state, the coded channel according to the 32-kbit/s or less ADPCM scheme (step ST26).

In this way, the coding mode switching decision (1) is carried out.

Next, referring to Fig. 5, the coding mode switching decision (2) for the coded channel according to the ADPCM scheme will be described.

In the coding mode switching decision (2), the transmission assignment processor 24 makes a decision for each channel as to whether the ANSam signal is detected or not by the decision result fed from the ANSam signal detector 23 (step ST31). When the ANSam signal is detected, the transmission assignment processor 24 generates a 64-kbit/s clear channel assignment request for the channel on which the ANSam signal is detected. In addition, it supplies the CC message encoder 27 with a 64-kbit/s clear channel assignment request indication for the channel opposite to the former channel. Then, it searches for a vacant channel of the transmission signals until securing a 64-kbit/s worth channel to switch the channel to the 64-kbit/s clear channel afterward (step ST32).

Here, at the time when the ANSam signal is detected, the transmission scheme is not switched to the 64-kbit/s clear channel immediately, but only the 64-kbit/s clear channel assignment request is generated. This is because at the time when the ANSam signal is detected, it is likely that the 64-kbit/s channel cannot be secured immediately depending on the congestion of the channels of the transmission signals, and hence it is necessary for the transmission assignment processor 24 to wait for channels now in use to be relinquished to positively secure the 64-kbit/s channel.

Furthermore, the transmission assignment processor 24 makes a decision for each channel as to whether the reception assignment processor 32 notifies it of the 64-kbit/s clear channel assignment request indication sent from the opposite side equipment (step ST33). When the notification is made of the 64-kbit/s clear channel assignment request indication sent from the opposite side equipment, the transmission assignment processor 24 generates the 64-kbit/s clear channel assignment request for the channel. Then, it searches for a vacant channel of the transmission signals until securing a 64-kbit/s worth channel to switch the channel to the 64-kbit/s clear channel afterward (step ST34).

Subsequently, the transmission assignment processor 24 makes a decision as to whether the 64-kbit/s clear channel assignment request has been generated or not (step ST35). When it has been generated, the transmission assignment processor 24 makes a decision as to whether the channels in both directions are in the inactive state or not (step ST36) by the activity decision result in the transmitting direction fed from the activity detector 22 and by the activity decision result in the receiving direction fed from the activity detector 36 in the receiving-side apparatus 12. When the channels in both directions are in the inactive state, the transmission assignment processor 24 switches the channels in both directions to the 64-kbit/s clear channels (step ST37).

On the other hand, when the 64-kbit/s clear channel assignment request has not yet been generated, or one of the channels in both directions is in the active state, the transmission assignment processor 24 terminates the coding mode switching decision (2).

In this way, the coding mode switching decision (2) is carried out.

In short, the transmission assignment processor 24 makes a decision as to the switching from the 64-kbit/s clear channel to the coded channel according to the ADPCM scheme in the coding mode switching decision (1), and as to the reverse switching from the coded channel according to the ADPCM scheme to the 64-kbit/s clear channel in the coding mode switching decision (2).

Thus operates the transmission assignment processor 24.

In response to the assignment indications from the transmission assignment processor 24, the coding section 25 assigns the channels of the input signals to its encoders. In response to the coding mode (coding scheme, coding bit rate) indications from the transmission assignment processor 24, the encoders of the coding section 25 encode the signals of the channels assigned, and supply the coded signals to the BC bit assignment section 26.

In response to the assignment indications from the transmission assignment processor 24, the BC bit assignment section 26 assigns the signals on the channels of the input signals or the signals coded by the encoders of the coding section 25 to available channels of the transmission signals, thereby outputting them to the transmission lines 3.

On the other hand, the transmission assignment processor 24 supplies the CC message encoder 27 with the map information indicating the assignment relationships between the channels of the signals on the trunk side (input signals) and the channels of the transmission signals, with the 64-kbit/s clear channel assignment request indication as needed, and with the coding mode of each channel (including that of the 64-kbit/s clear channel).

In addition, detecting the unique signal defined by the ITU recommendation V.8 in the startup procedure of the V.34 modem standard, the transmission assignment processor 24 supplies the CC message encoder 27 with the 64-kbit/s clear channel assignment request indication in order to switch the corresponding channel from the opposite side equipment to the receiving-side apparatus 12 to the 64-kbit/s clear channel.

Being supplied with the map information on the assignment relationships between the channels, the 64-kbit/s clear channel assignment request indication as needed and the coding modes of individual channels from the transmission assignment processor 24, the CC message encoder 27 transmits them to the opposite side equipment via the control channel of the transmission lines 3 as the CC message.

Specifically, as for the ANSam signal specified in the V.8 recommendation, it is to be transmitted from the called terminal to the calling terminal, and hence the ANSam signal detector 23 in the transmission apparatus on the called terminal side detects the ANSam signal. In this case, it is not enough to switch only the transmission signal from the called terminal to the calling terminal (the opposite side equipment) to the 64-kbit/s clear channel because the transmission signal in the reverse direction from the calling terminal to the called terminal is not switched to the 64-kbit/s clear channel, preventing the normal transmission of the signal that must be transmitted from the calling terminal to the called terminal by means of a high quality transmission scheme. In view of this, when the transmission apparatus on the called terminal side detects the ANSam signal, the CC message encoder 27 sends to the opposite side equipment the CC message including the 64-kbit/s clear channel assignment request indication, so that the opposite side equipment (the transmission apparatus on the calling terminal side) can switch the transmission signal, which is to be sent to the transmission apparatus on the called terminal side, to the 64-kbit/s clear channel in response to the reception of the CC message.

In this way, the transmitting-side apparatus 11 sets the transmission scheme as appropriate, so that the input signals from the trunk side are transmitted to the opposite side equipment via the transmission lines 3, as the transmission signals to the bearer side.

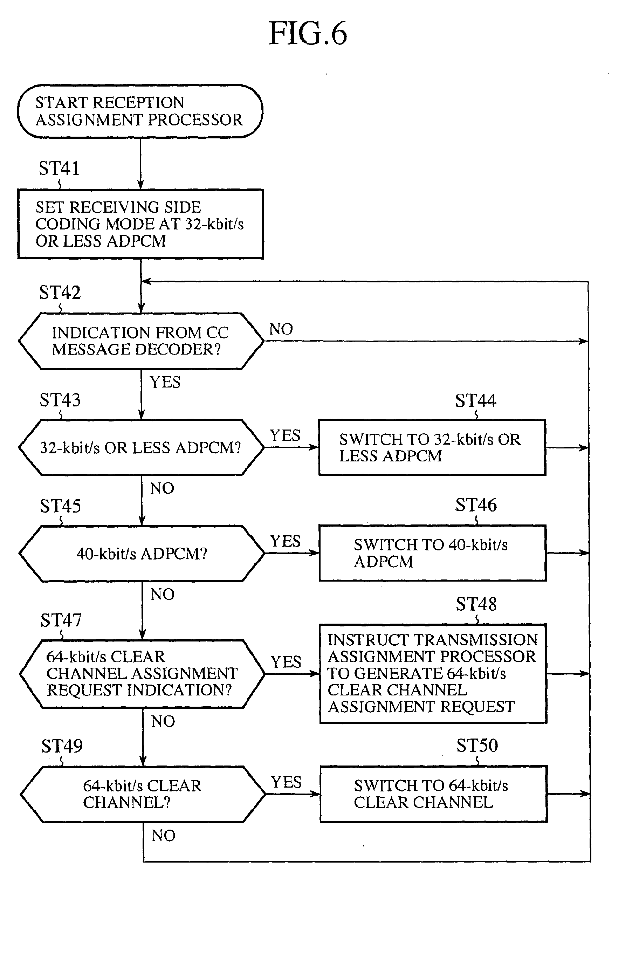

Next, the operation of the receiving-side apparatus 12 will be described. Fig. 6 is a flowchart illustrating the operation of the reception assignment processor 32 in the present embodiment 1 of the transmission apparatus.

Receiving the CC message from the opposite side equipment via the control channel of the transmission lines 3, the CC message decoder 31 extracts from the CC message the map information on the assignment relationships between the channels of the transmission signals and the channels of the signals (output signals) on the trunk side, the 64-kbit/s clear channel assignment request indication when present, and the information about the coding modes of individual channels, and supplies them to the reception assignment processor 32.

In response to the map information fed from the CC message decoder 31, the reception assignment processor 32 supplies the BC bit assignment section 33 and the decoding section 34 with the assignment indications of the channels of the transmission signals to the decoders in the decoding section 34 and to the channels of the output signals. As for some of the 64-kbit/s clear channels among the channels of the transmission signals, however, the reception assignment processor 32 supplies the BC bit assignment section 33 with the assignment indications of the channels of the transmission signals to the channels of the output signals.

Specifically, the reception assignment processor 32 causes the BC bit assignment section 33 to assign some of the 64-kbit/s clear channels of the transmission signals not to the decoders, but directly to the channels of the output signals, and each of the remaining channels to one of the decoders in the decoding section 34, and to assign these decoders to the channels of the output signals.

When supplied with the 64-kbit/s clear channel assignment request indication from the CC message decoder 31, the reception assignment processor 32 transfers the 64-kbit/s clear channel assignment request indication to the transmission assignment processor 24. Receiving the 64-kbit/s clear channel assignment request indication, the transmission assignment processor 24 places the designated channel at the 64-kbit/s clear channel as described above.

In addition, in response to the coding modes of individual channels supplied from the CC message decoder 31, the reception assignment processor 32 makes a decision as to whether the signal type of each channel of the transmission signals is a speech or data, and supplies the decision result to the speech/data discriminator 21 in the transmitting-side apparatus 11.

For example, the signal type on the channel with a coding mode of 32-kbit/s, 24-kbit/s or 16-kbit/s ADPCM scheme is decided as a "speech" , whereas the signal type on the channel with a coding mode of 40-kbit/s ADPCM scheme is decided as "data".

Next, the operation of the reception assignment processor 32 will be described in more detail with reference to the flowchart of Fig. 6 illustrating its operation. Incidentally, the control of the coding bit rate in accordance with the number of vacant channels of the transmission signals is omitted here as with the processing of the transmission assignment processor 24 as shown in Figs. 3-5, so that the 32-kbit/s, 24-kbit/s and 16-kbit/s ADPCM schemes are handled together as the 32-kbit/s or less ADPCM scheme.

First, the reception assignment processor 32 provides the decoding section 34 with the coding mode indication according to the 32-kbit/s or less ADPCM scheme to place the quality of the transmission signal at the initial state (step ST41).

Subsequently, the reception assignment processor 32 makes a decision as to whether it is supplied with the contents of the CC message received by the CC message decoder 31 or not (step ST42). When supplied with the contents of the received CC message from the CC message decoder 31, and when the contents include the information about the coding mode of the channel of the transmission signal, the reception assignment processor 32 makes a decision as to whether the coding mode of the channel is the 32-kbit/s or less ADPCM scheme (step ST43). When the coding mode is the 32-kbit/s or less ADPCM scheme, the reception assignment processor 32 supplies the decoding section 34 with the instruction to switch the channel to the coded channel according to the 32-kbit/s or less ADPCM scheme (step ST44).

Subsequently, the reception assignment processor 32 makes a decision as to whether the coding mode of the channel is the 40-kbit/s ADPCM scheme (step ST45). When the coding mode is the 40-kbit/s ADPCM scheme, the reception assignment processor 32 supplies the decoding section 34 with the instruction to switch the channel to the coded channel according to the 40-kbit/s ADPCM scheme (step ST46).

Next, the reception assignment processor 32 makes a decision as to whether the contents of the CC message includes the 64-kbit/s clear channel assignment request indication (step ST47). When the 64-kbit/s clear channel assignment request indication is present, the reception assignment processor 32 transfers it to the transmission assignment processor 24 in the transmitting-side apparatus 11 (step ST48).

Subsequently, the reception assignment processor 32 makes a decision as to whether the contents include the information about the coding mode of the channel of the transmission signal, and whether the coding mode is the 64-kbit/s clear channel or not (step ST49). When the coding mode is the 64-kbit/s clear channel, the reception assignment processor 32 supplies the BC bit assignment section 33 and the decoding section 34 with the instruction to switch the channel to the 64-kbit/s clear channel (step ST50).

Thus operates the reception assignment processor 32.

In response to the assignment indication fed from the reception assignment processor 32, the BC bit assignment section 33 assigns the 64-kbit/s clear channels among the channels of the transmission signals directly to the channels of the output signals, whereas it assigns the coded channels to the decoders of the decoding section 34.

Each decoder in the decoding section 34 decodes the signal of the assigned channel in response to the information about the coding mode fed from the reception assignment processor 32, and supplies the decoded signal to the assigned channel of the output signals. In this case, in response to the information about the coding modes, the decoders decode the individual signals of the channels of the transmission signals in accordance with the coding schemes and coding bit rates used by the coding section 25 of the opposite side equipment.

The output signals of the channels are supplied from either the decoding section 34 or the BC bit assignment section 33 to the switching system 2A or 2B via the output section 35.

Analyzing the output signals, the activity detector 36 makes a decision as to whether the signals of the channels are each in the active state or inactive state, and supplies the decision results to the transmission assignment processor 24. In response to the decision results, the transmission assignment processor 24 decides the end of the calls as described above.

In this way, the receiving-side apparatus 11 receives the transmission signals from the opposite side equipment via the transmission lines 3, and supplies them to the trunk side as the output signal.

As described above, the transmitting-side apparatus 11 and the receiving-side apparatus 12 operate.

Next, the operation of the transmission apparatuses 1A and 1B of the present embodiment 1 will be described, when the facsimile signal according to the conventional V.17 and slower protocol (modem standards with a data bit rate of 14.4 kbit/s or less according to the ITU recommendations V.17, V.29 and V.27ter) is supplied as the input signal. Here, the facsimile terminals on the calling side are assumed to be facsimile terminals 5A-i (i 1, .., m), and the facsimile terminals on the called side are assumed to be facsimile terminal 5B-j (j = 1, .., q).

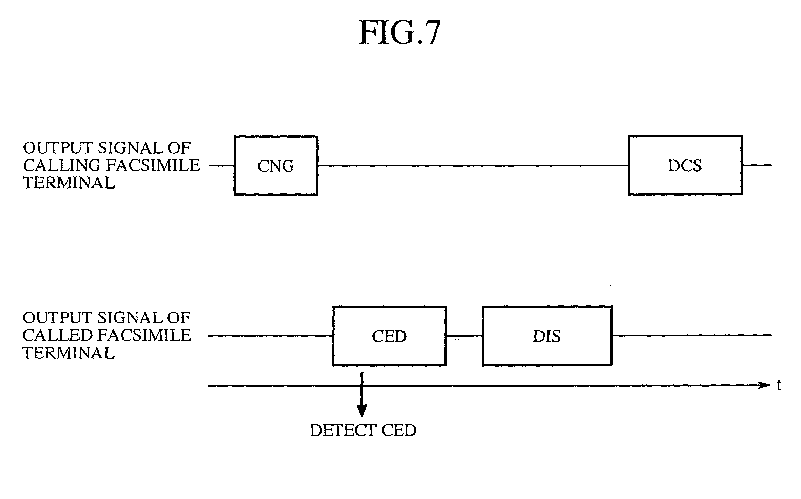

Fig. 7 is a diagram showing a facsimile signal sequence according to V.17 and slower protocols. In this figure, signals CNG, CED, DIS and DCS are those specified in the ITU recommendation T.30 defining a facsimile transmission procedure: CNG (calling tone) is a 1100 Hz tone signal, CED (called tone) is a 2100 Hz tone signal, DIS (digital identification signal) and DCS (digital command signal) are each a modem signal modulated by the channel No.2 system defined in the ITU recommendation V.21.

First, in the initial state before the facsimile signal according to the V.17 and slower procedures is input, the transmission assignment processor 24 places its channel at a coded channel according to the 32-kbit/s or less ADPCM scheme (step ST1), and the reception assignment processor 32 places its channel at a coded channel according to the 32-kbit/s or less ADPCM scheme (step ST41).

Thus, the coding mode of the coding section 25 and the decoding section 34 is initially set at the 32-kbit/s or less ADPCM scheme, so that the transmission of the transmission signals that are coded according to the 32-kbit/s or less ADPCM scheme is started.

Subsequently, as shown in Fig. 7, the calling side facsimile terminal 5A-i transmits the CNG signal, and then the called side facsimile terminal 5B-j transmits the CED signal, in which case, detecting the 2100 Hz tone of the CED signal, the speech/data discriminator 21 of the transmission apparatus 1B, to which the called side facsimile terminal 5B-j is connected, makes a decision that the signal type on the channel from the called side to the calling side is "data". Thus, the transmission assignment processor 24 of the transmission apparatus 1B sets the channel at the coded channel according to the 40-kbit/s ADPCM scheme (step ST9).

In addition, the transmission assignment processor 24 in the transmission apparatus 1B causes the CC message encoder 27 to transmit to the transmission apparatus 1A the CC message that provides the calling side with the information about the coding mode that the channel from the called side to the calling side is set at the coded channel according to the 40-kbit/s ADPCM scheme.

The CC message decoder 31 of the receiving-side apparatus 12 in the transmission apparatus 1A receives the CC message, and supplies the reception assignment processor 32 with the information about the coding mode that the channel from the called side to the calling side is set at the coded channel according to the 40-kbit/s ADPCM scheme. Being supplied with the information, the reception assignment processor 32 provides the decoding section 34 with an instruction to set the channel from the called side to the calling side at the coded channel according to the 40-kbit/s ADPCM scheme (step ST46).

Thus, the coding mode of the coding section 25 of the transmission apparatus 1B and that of the decoding section 34 of the transmission apparatus 1A are both set at the 40-kbit/s ADPCM scheme, and the channel from the called side to the calling side is switched to the coded channel according to the 40-kbit/s ADPCM scheme.

Furthermore, making a decision that the signal type on the channel from the called side to the calling side is "data" by the information about the coding mode fed from the CC message decoder 31, the reception assignment processor 32 of the receiving-side apparatus 12 in the transmission apparatus 1A notifies the speech/data discriminator 21 of the transmitting-side apparatus 11 of the fact. Thus, the speech/data discriminator 21 of the transmitting-side apparatus 11 produces the decision result "data", so that the transmission assignment processor 24 sets the channel from the calling side to the called side at the coded channel according to the 40-kbit/s ADPCM scheme (step ST9).

In addition, the transmission assignment processor 24 in the transmission apparatus 1A causes the CC message encoder 27 to transmit to the transmission apparatus 1B the information about the coding mode that the channel from the calling side to the called side is set at the coded channel according to the 40-kbit/s ADPCM scheme as the CC message.

Receiving the CC message, the CC message decoder 31 of the receiving-side apparatus 12 in the transmission apparatus 1B supplies the reception assignment processor 32 with the information about the coding mode that the channel from the calling side to the called side is set at the coded channel according to the 40-kbit/s ADPCM scheme. Being supplied with the information, the reception assignment processor 32 provides the decoding section 34 with the instruction to set the channel from the calling side to the called side at the coded channel according to the 40-kbit/s ADPCM scheme (step ST46).

Thus, the coding mode of the coding section 25 of the transmission apparatus 1A and that of the decoding section 34 of the transmission apparatus 1B are both set at the 40-kbit/s ADPCM scheme, so that the channel from the calling side to the called side is switched to the coded channel according to the 40-kbit/s ADPCM scheme in the same manner as the channel from the called side to the calling side. Accordingly, the channels of the transmission signals in the two directions are both switched to the 40-kbit/s coded channels according to the ADPCM scheme suitable for transmitting the facsimile signal according to the V.17 and slower protocols, thereby allowing the facsimile signal to be transmitted normally.

In this way, the facsimile signal according to the V.17 and slower protocols is transmitted normally through the coded channels according to the 40-kbit/s ADPCM scheme.

Next, the operation of the transmission apparatuses 1A and 1B of the present embodiment 1 will be described, when the facsimile signal according to the V.34 procedure is supplied as the input signal. Here, the facsimile terminals on the calling side are assumed to be facsimile terminals 5A-i (i = 1,.., m), and the facsimile terminals on the called side are assumed to be facsimile terminal 5B-j (j = 1,.., q).

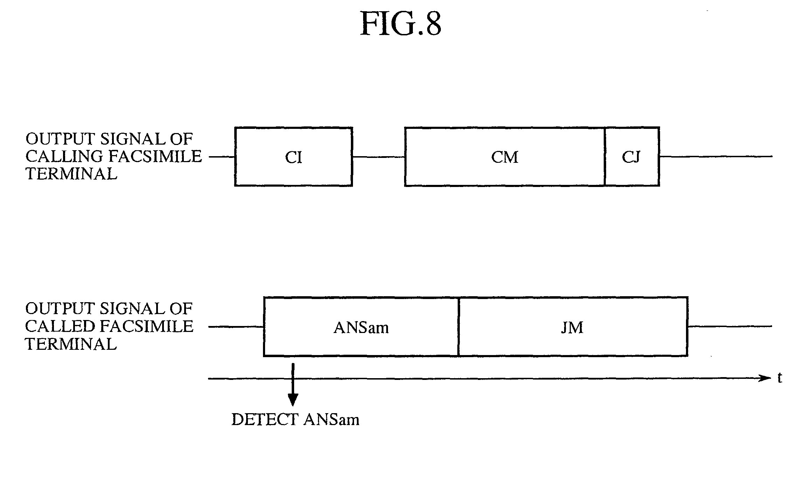

Fig. 8 is a diagram showing a facsimile signal sequence according to the V.34 modem standard. In this figure, signals CI, CM, CJ, ANSam and JM are those specified in the ITU recommendation V.8, and are used in the Phase 1 of the startup procedure according to the ITU V.34 modem standard. The ANSam (modified answer tone) is a signal generated by amplitude modulating the 2100 Hz tone signal with a 15 Hz signal, the CI (call indicator signal), CM (call menu signal) and CJ (CM terminator) are modem signals modulated by the channel No.1 scheme specified in the ITU recommendation V.21, and the JM (joint menu signal) is a modem signal modulated by the V.21 channel No.2 scheme.

First, in the initial state before the facsimile signal according to the V.34 is input, the transmission assignment processor 24 places its channel at a coded channel according to the 32-kbit/s or less ADPCM scheme (step ST1), and the reception assignment processor 32 also places its channel at a coded channel according to the 32-kbit/s or less ADPCM scheme (step ST41).

Thus, the coding mode of the coding section 25 and the decoding section 34 is initially set at the 32-kbit/s or less ADPCM scheme, so that the transmission of the transmission signals that are coded according to the 32-kbit/s or less ADPCM scheme is started.

Subsequently, when the calling side facsimile terminal 5A-i transmits the CI signal as shown in Fig. 8, the speech/data discriminator 21 of the transmitting-side apparatus 11 in the transmission apparatus 1A makes a decision that the signal type on the channel from the calling side to the called side is "data". Thus, the transmission assignment processor 24 of the transmission apparatus 1A sets the channel from the calling side to the called side at the coded channel according to the 40-kbit/s ADPCM scheme (step ST9).

In addition, the transmission assignment processor 24 in the transmission apparatus 1A causes the CC message encoder 27 to transmit to the transmission apparatus 1B the CC message including the coding mode information that the channel from the calling side to the called side is set at the coded channel according to the 40-kbit/s ADPCM scheme.

The CC message decoder 31 of the receiving-side apparatus 12 in the transmission apparatus 1B receives the CC message, and supplies the reception assignment processor 32 with the information about the coding mode that the channel from the calling side to the called side is set at the coded channel according to the 40-kbit/s ADPCM scheme. Being supplied with the information, the reception assignment processor 32 provides the decoding section 34 with an instruction to set the channel from the calling side to the called side at the coded channel according to the 40-kbit/s ADPCM scheme (step ST46).

Thus, the coding mode of the coding section 25 of the transmission apparatus 1A and that of the decoding section 34 of the transmission apparatus 1B are both set at the 40-kbit/s ADPCM scheme, and the channel from the calling side to the called side is switched to the coded channel according to the 40-kbit/s ADPCM scheme.

Furthermore, making a decision that the signal type on the channel from the called side to the calling side is "data" by the information about the coding mode fed from the CC message decoder 31, the reception assignment processor 32 of the receiving-side apparatus 12 in the transmission apparatus 1B notifies the speech/data discriminator 21 in the transmitting-side apparatus 11 of the fact. Thus, the speech/data discriminator 21 of the transmitting-side apparatus 11 produces the decision result "data", so that the transmission assignment processor 24 sets the channel from the called side to the calling side at the coded channel according to the 40-kbit/s ADPCM scheme (step ST9).

In addition, the transmission assignment processor 24 in the transmission apparatus 1B causes the CC message encoder 27 to transmit to the transmission apparatus 1A the information about the coding mode that the channel from the called side to the calling side is set at the coded channel according to the 40-kbit/s ADPCM scheme as the CC message.

Receiving the CC message, the CC message decoder 31 of the receiving-side apparatus 12 in the transmission apparatus 1A supplies the reception assignment processor 32 with the information about the coding mode that the channel from the called side to the calling side is set at the coded channel according to the 40-kbit/s ADPCM scheme. Being supplied with the information, the reception assignment processor 32 provides the decoding section 34 with the instruction to set the channel from the called side to the calling side at the coded channel according to the 40-kbit/s ADPCM scheme (step ST46).

Thus, the coding mode of the coding section 25 of the transmission apparatus 1B and that of the decoding section 34 of the transmission apparatus 1A are both set at the 40-kbit/s ADPCM scheme, so that the channel from the called side to the calling side is switched to the coded channel according to the 40-kbit/s ADPCM scheme in the same manner as the channel from the calling side to the called side is switched.

After that, when the called side facsimile terminal 5B-j transmits the ANSam signal, the ANSam signal detector 23 of the transmitting-side apparatus 11 in the transmission apparatus 1B detects the ANSam signal on the channel from the called side to the calling side. Thus, the transmission assignment processor 24 generates the 64-kbit/s clear channel assignment request for the channel, and supplies the CC message encoder 27 with the 64-kbit/s clear channel assignment request indication for the channel from the calling side to the called side. In addition, the transmission assignment processor 24 searches for a vacant channel of the transmission signals until the 64-kbit/s worth channel is secured in order to switch the channel to the 64-kbit/s clear channel afterward (step ST32).

The CC message encoder 27 of the transmitting-side apparatus 11 in the transmission apparatus 1B transmits the 64-kbit/s clear channel assignment request indication to the transmission apparatus 1A as the CC message.

Receiving the CC message, the CC message decoder 31 of the receiving-side apparatus 12 in the transmission apparatus 1A supplies the 64-kbit/s clear channel assignment request indication to the reception assignment processor 32 that transfers the 64-kbit/s clear channel assignment request indication to the transmission assignment processor 24 of the transmitting-side apparatus 11 (step ST48).

Then, being supplied with the 64-kbit/s clear channel assignment request indication, the transmission assignment processor 24 of the transmitting-side apparatus 11 in the transmission apparatus 1A generates a 64-kbit/s clear channel assignment request for the channel from the calling side to the called side, and then in order to switch the channel to the 64-kbit/s clear channel afterward, it searches for a vacant channel for the transmission signal until it secures a 64-kbit/s worth channel (step ST34).

At this point of time, although the 64-kbit/s clear channel assignment request has been generated, since the channels in the two directions are not yet switched to the 64-kbit/s clear channels, they are still 40-kbit/s coded channels according to the ADPCM scheme.

After that, the calling side facsimile terminal 5A-i sends the CM signal and CJ signal, and the called side facsimile terminal 5B-j sends the JM signal. After that, when the activity detectors 22 and 36 detect that both the channel from the calling side to the called side and the channel from the called side to the calling side are in the inactive state, the transmission assignment processor 24 of the transmitting-side apparatus 11 in the transmission apparatus 1A switches the channel extending from the calling side to the called side to the 64-kbit/s clear channel, and the transmission assignment processor 24 of the transmitting-side apparatus 11 in the transmission apparatus 1B switches the channel extending from the called side to the calling side to the 64-kbit/s clear channel (step ST37). When the channels are switched to the 64-kbit/s clear channels, the CC message encoders 27 of both sides transmit to their opposite side equipment the CC message including the information about the coding mode.

Receiving the CC message including the information about the coding mode that the channel from the called side to the calling side is switched to the 64-kbit/s clear channel, the CC message decoder 31 of the receiving-side apparatus 12 in the transmission apparatus 1A supplies the information to the reception assignment processor 32. Being supplied with the information, the reception assignment processor 32 provides the BC bit assignment section 33 with the instruction to set the channel extending from the called side to the calling side to the 64-kbit/s clear channel (step ST50).

Likewise, receiving the CC message including the information about the coding mode that the channel from the calling side to the called side is switched to the 64-kbit/s clear channel, the CC message decoder 31 of the receiving-side apparatus 12 in the transmission apparatus 1B supplies the information to the reception assignment processor 32. Being supplied with the information, the reception assignment processor 32 provides the BC bit assignment section 33 with the instruction to set the channel extending from the calling side to the called side to the 64-kbit/s clear channel (step ST50).

Thus, both the channels from the called side to the calling side and from the calling side to the called side are switched to the 64-kbit/s clear channels, and the encoders and decoders according to the 40-kbit/s ADPCM scheme that have been assigned are relinquished. Therefore, the signal on the channel of the input signal is transmitted from the transmission apparatus 1A or 1B to the opposite side equipment, the transmission apparatus 1B or 1A, through the channel of the transmission signal without being encoded, and the opposite side equipment, the transmission apparatus 1B or 1A outputs the signal to the channel of the output signal without decoding them. Therefore, the subsequent transmission of the facsimile signals is carried out normally via the 64-kbit/s clear channels.

When the transmission and reception of the facsimile signal terminates, and both the transmitting and receiving directions become inactive state (step ST21), each transmission assignment processor 24 of the transmitting-side apparatuses 11 in the transmission apparatuses 1A and 1B enables the pause duration timer to start the measurement of the pause time period (step ST22). When the inactive state exceeds the predetermined time period, and the timer expires (step ST25), a decision is made that the call terminates, thereby switching the channels to the coded channel according to the 32-kbit/s or less ADPCM scheme (step ST26).

In this way, the V.34 facsimile signals are transmitted normally via the 64-kbit/s clear channels.

As described above, the present embodiment 1 is configured such that it transmits the input signal consisting of the speech signal or voice band data signal to the opposite side equipment via the transmission lines as a transmission signal assuming different quality depending on whether the specified signal according to the prescribed startup procedure is detected or not from the input signal . As a result, it offers an advantage of being able to transmit the V.34 facsimile signal or the V.34 data-modem signal, which cannot be transmitted normally via the coded channel according to the 40-kbit/s ADPCM scheme, normally through the higher quality 64-kbit/s clear channel, for example.

In addition, the present embodiment 1 is configured such that it detects the ANSam signal defined in the ITU recommendation V.8 as the specified signal in the prescribed startup procedure. As a result, it offers an advantage of being able to detect the start of the V.34 modem transmission, and hence to switch to the high quality channel that can transmit the V.34 modem signal normally.

Furthermore, since the present embodiment 1 transmits the 64-kbit/s clear channel assignment request indication to the opposite side equipment, it offers an advantage of being able to switch the channels in both the directions to the 64-kbit/s clear channels.

Moreover, the present embodiment 1 is configured such that it does not switch the channel to the 64-kbit/s clear channel immediately after it detects the unique signal defined by the ITU recommendations V.8, but switches after the channels in both the directions become inactive state. As a result, it offers an advantage of being able to ameliorate the problem in that it sometimes cannot assign the 64-kbit/s channels, and hence hinders normal communication.

In addition, the present embodiment 1 is configured such that it monitors the active/inactive state of the channels in both directions, and that when the inactive state continues for more than the predetermined time period in both the directions, it makes a decision that the call terminates. Therefore, it offers an advantage of being able to switch the quality of the channel after the call terminates.

Although the present embodiment 1 employs the 40-kbit/s, 32-kbit/s, 24-kbit/s or 16-kbit/s ADPCM scheme defined by the ITU recommendation G.726 as the coding scheme used by the coding section 25, this is not essential for the coding scheme of the encoders. It can also employ other speech coding schemes such as the 16-kbit/s LD-CELP defined by the ITU recommendation G.728, and the 8-kbit/s CS-ACELP defined by the ITU recommendation G.729.

In addition, although the present embodiment 1 is configured such that when it uses the protocol specified in the ITU recommendation V.8 as the startup procedure of the facsimile signal or data-modem signal, it transmits the transmission signal through the higher quality 64-kbit/s clear channel upon detecting the unique signal according to the V.8 protocol, this is not essential. For example, when it employs the ITU recommendation V.8bis instead of the V.8 as the startup procedure, it can transmit the transmission signal through the high quality 64-kbit/s clear channel when it detects the unique signal in the V.8bis. Besides, when it employs any other startup procedure, it can transmit the transmission signal through the high quality 64-kbit/s clear channel when it detects the unique signal of the startup procedure.

### EMBODIMENT 2

Instead of the 64-kbit/s clear channel assignment request indication transmitted in the foregoing embodiment 1, the transmission apparatus 1A or 1B of the present embodiment 2 in accordance with the present invention transmits the detection information of the unique signal (such as the ANSam signal) in the start procedure of the V.8 or V.8bis standard to the opposite side equipment.

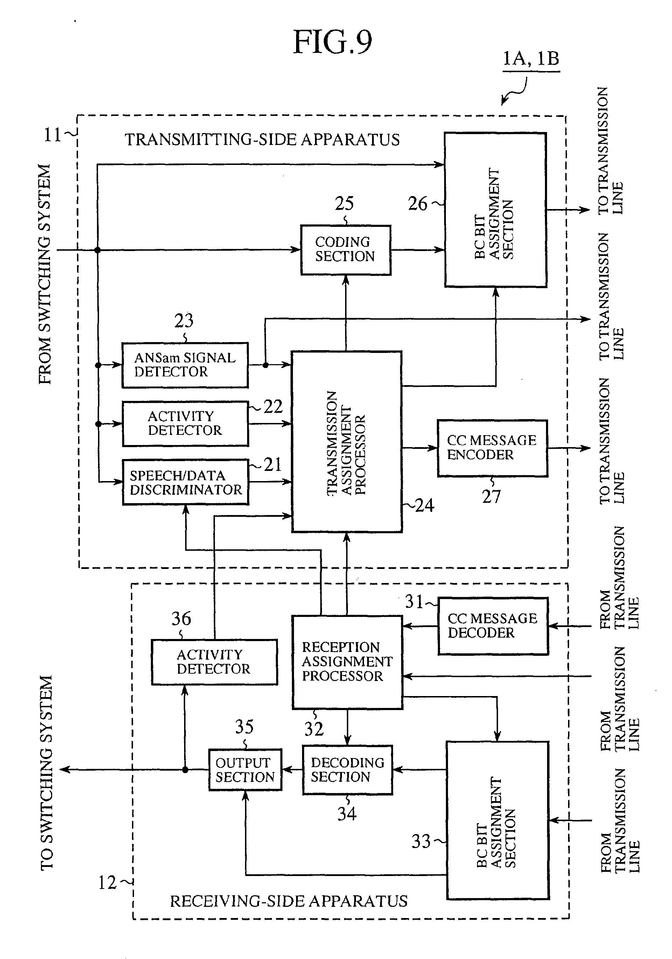

Fig. 9 is a block diagram showing a configuration of a transmission apparatus 1A or 1B of the embodiment 2 in accordance with the present invention. Since the individual components of Fig. 9 are the same as those of the foregoing embodiment 1, the description thereof is omitted here. Only, the following points are different; the decision result of the ANSam signal detector 23 of the transmitting-side apparatus 11 is transmitted to the reception assignment processor 32 of the receiving-side apparatus 12 in the opposite side equipment via the transmission lines 3; the CC message encoder 27 of the transmitting-side apparatus 11 does not transmit the 64-kbit/s clear channel assignment request indication; and the reception assignment processor 32 of the receiving-side apparatus 12 receives the decision result from the ANSam signal detector 23 of the opposite side equipment, and employs it instead of the 64-kbit/s clear channel assignment request indication.

Next, the operation of the present embodiment 2 will be described.

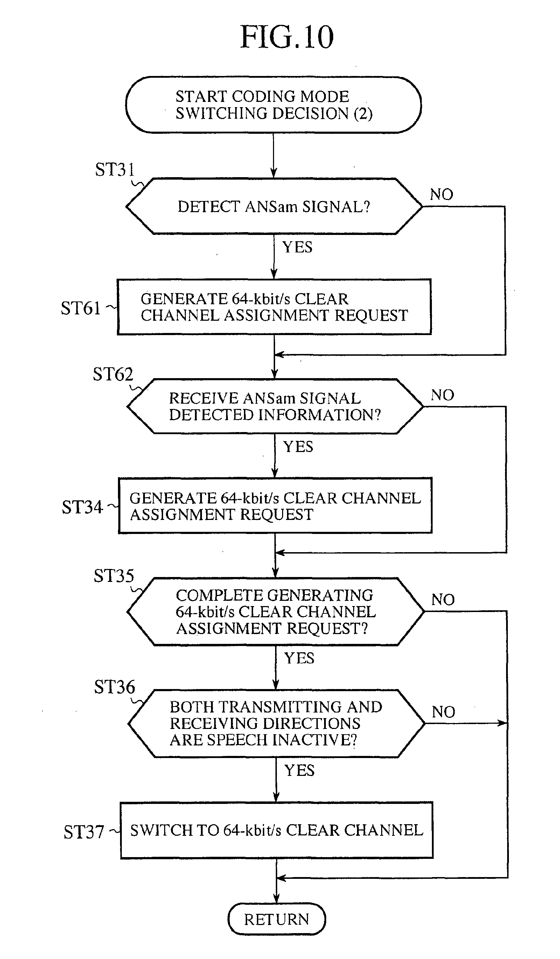

First, the operation of the transmitting-side apparatus 11 will be described. Fig.10 is a flowchart illustrating the detail of the coding mode switching decision (2) by the transmission assignment processor 24 of the transmitting-side apparatus 11 in the present embodiment 2.

In the transmitting-side apparatus 11 in the transmission apparatus 1A or 1B of the embodiment 2, the decision result about each channel by the ANSam signal detector 23 is transmitted to the reception assignment processor 32 of the receiving-side apparatus 12 in the opposite side equipment via the control channel of the transmission lines 3, instead of transmitting the 64-kbit/s clear channel assignment request indication from the CC message encoder 27 of the transmitting-side apparatus 11.

When the ANSam signal detector 23 detects the ANSam signal in the coding mode switching decision (2), the transmission assignment processor 24 of the transmitting-side apparatus 11 generates the 64-kbit/s clear channel assignment request for the channel on which the ANSam signal is detected (step ST61). However, the transmission assignment processor 24 does not supply the CC message encoder 27 with the 64-kbit/s clear channel assignment request indication for the channel in the direction opposite to the former channel. In other words, the CC message encoder 27 of the transmission apparatus 1A or 1B of the present embodiment 2 does not transmit the 64-kbit/s clear channel assignment request indication to the opposite side equipment.

The transmission assignment processor 24 of the transmitting-side apparatus 11 makes a decision as to whether it receives the notification that the opposite side equipment detects the ANSam signal, from the reception assignment processor 32 of the receiving-side apparatus 12 or not (step ST62). Receiving such a decision result, the transmission assignment processor 24 generates the 64-kbit/s clear channel assignment request for the channel of the input signal corresponding to the channel on which the ANSam signal is detected (step ST34).

As for the other operation of the transmitting-side apparatus 11 of the transmission apparatus 1A or 1B of the embodiment 2, it is the same as that of the transmitting-side apparatus 11 in the transmission apparatus 1A or 1B in the foregoing embodiment 1, and hence the description thereof is omitted here.

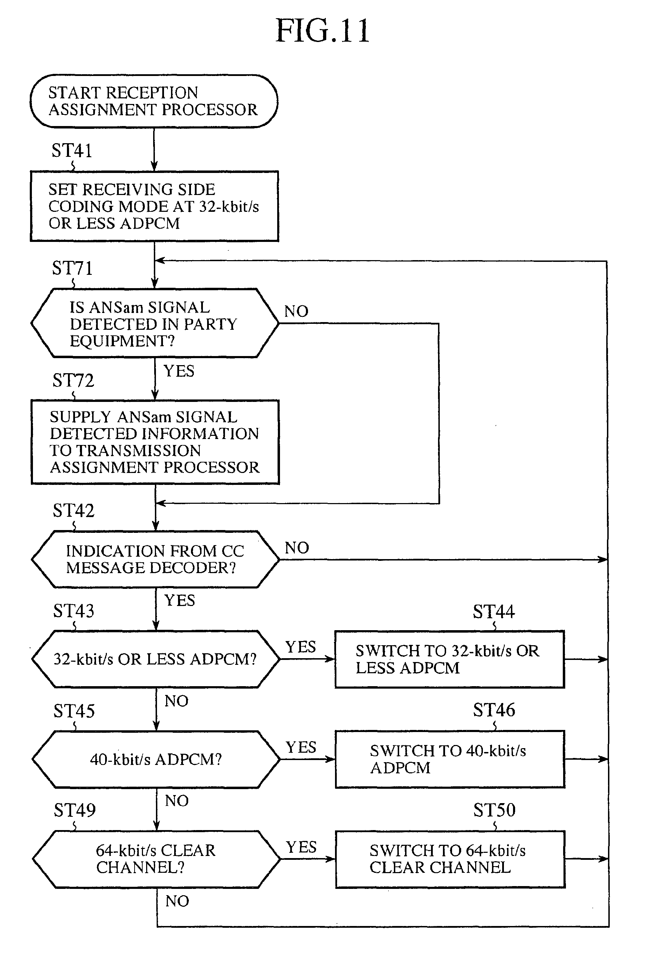

Next, the operation of the receiving-side apparatus 12 will be described. Fig. 11 is a flowchart illustrating the operation of the reception assignment processor 32 in the transmission apparatus of the present embodiment 2.

In the receiving-side apparatus 12 in the transmission apparatus 1A or 1B of the present embodiment 2, the reception assignment processor 32 makes a decision as to whether the ANSam signal is detected or not in the opposite side equipment by the decision result transmitted from the ANSam signal detector 23 of the opposite side equipment via the transmission lines 3 (step ST71). When the reception assignment processor 32 decides that the ANSam signal is detected in the opposite side equipment, it notifies the transmission assignment processor 24 of the fact (step ST72).

Incidentally, since the remaining operation of the receiving-side apparatus 12 of the transmission apparatus 1A or 1B in the present embodiment 2 is the same as that of the receiving-side apparatus 12 in the transmission apparatus 1A or 1B of the foregoing embodiment 1, the description thereof is omitted here. In the embodiment 2, however, since the 64-kbit/s clear channel assignment request indication is not transmitted from the opposite side equipment, the processing corresponding to it (such as steps ST47 and ST48) is not carried out.

As described above, the present embodiment 2 is configured such that it transmits to the opposite side equipment the detection information of the unique signal (such as the ANSam signal) used in the prescribed startup procedure instead of the 64-kbit/s clear channel assignment request indication. Thus, besides the advantages of the foregoing embodiment 1, it offers an advantage of being able to switch the channels in both directions to the 64-kbit/s clear channels.

### EMBODIMENT 3

Instead of transmitting to the opposite side equipment the 64-kbit/s clear channel assignment request indication or the decision result that a specified signal such as the ANSam signal is detected from the input signal from the trunk side, the transmission apparatus 1A or 1B of the present embodiment 3 in accordance with the present invention detects a specified signal such as the ANSam signal from the output signal to the trunk side, thereby detecting the specified signal for the signals in both the directions.

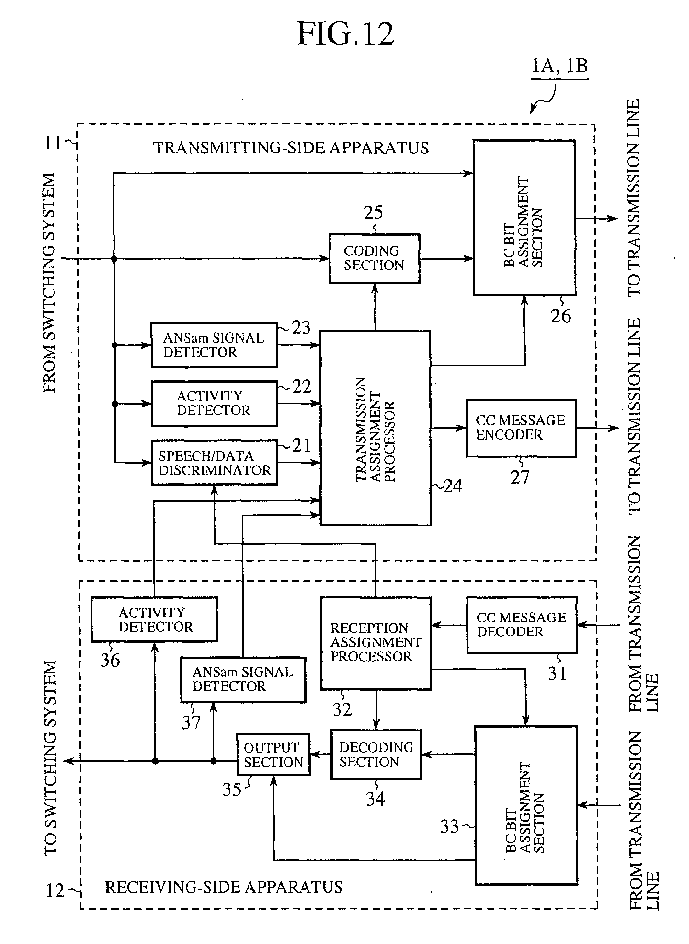

Fig. 12 is a block diagram showing a configuration of a transmission apparatus 1A or 1B of the present embodiment 3 in accordance with the present invention. In this figure, the reference numeral 37 designates an ANSam signal detector for detecting the ANSam signal defined in the V.8 protocol with respect to the output signal on each channel to the trunk side by analyzing the output signal in the same manner as the ANSam signal detector 23 does.

Since the remaining components of Fig. 12 are the same as those of the foregoing embodiment 1, the description thereof is omitted here. Only, the transmission assignment processor 24 of the transmitting-side apparatus 11 does not supply the CC message encoder 27 with the 64-kbit/s clear channel assignment request indication. In addition, when the ANSam signal detector 37 detects the ANSam signal, the transmission assignment processor 24 switches the channel of the input signal corresponding to the channel of the output signal in which the ANSam signal is detected (that is, one of the channels in both the directions between the same terminals) to the 64-kbit/s clear channel.

Next, the operation of the present embodiment 3 will be described.

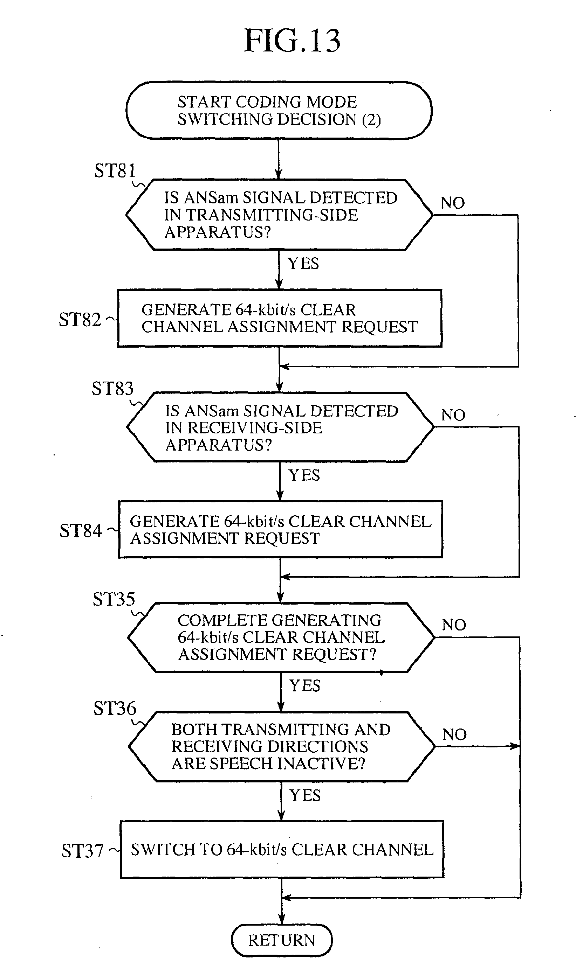

First, the operation of the transmitting-side apparatus 11 will be described. Fig. 13 is a flowchart illustrating the detail of the coding mode switching decision (2) by the transmission assignment processor 24 of the transmitting-side apparatus 11 in the present embodiment 3.

In the coding mode switching decision (2), the transmission assignment processor 24 in the present embodiment 3 makes a decision as to whether the ANSam signal is detected on each channel of the input signals using the decision result fed from the ANSam signal detector 23 in the transmitting-side apparatus 11 (step ST81). When the ANSam signal is detected, the transmission assignment processor 24 generates the 64-kbit/s clear channel assignment request for the channel on which the ANSam signal is detected, and searches for a vacant channel of the transmission signal until the 64-kbit/s worth channel is secured (step ST82), in order to switch the channel to the 64-kbit/s clear channel afterward.

In addition, the transmission assignment processor 24 makes a decision as to whether the ANSam signal is detected on each channel of the output signals using the decision result fed from the ANSam signal detector 37 of the receiving-side apparatus 12 (step ST83). When the ANSam signal is detected, the transmission assignment processor 24 generates the 64-kbit/s clear channel assignment request for the channel of the input signal corresponding to the channel of the output signal on which the ANSam signal is detected, and searches for a vacant channel of the transmission signals until the 64-kbit/s worth channel is secured (step ST84), in order to switch the channel to the 64-kbit/s clear channel.

Subsequently, the transmission assignment processor 24 makes a decision as to whether the 64-kbit/s clear channel assignment request has been generated or not (step ST35). When it has been generated, the transmission assignment processor 24 makes a decision as to whether the channels in both directions are in the inactive state or not (step ST36) by the activity decision result in the transmitting direction fed from the activity detector 22 and by the activity decision result in the receiving direction fed from the activity detector 36 in the receiving-side apparatus 12. When the channels in both directions are in the inactive state, the transmission assignment processor 24 switches the channels in both directions to the 64-kbit/s clear channels (step ST37).

On the other hand, when the 64-kbit/s clear channel assignment request has not yet been generated, or one of the channels in both directions is in the active state, the transmission assignment processor 24 terminates the coding mode switching decision (2).

Since the remaining operation of the transmitting-side apparatus 11 in the transmission apparatus 1A or 1B of the present embodiment 3 is the same as that of the transmitting-side apparatus 11 in the transmission apparatus 1A or 1B of the foregoing embodiment 1, the description thereof is omitted here.

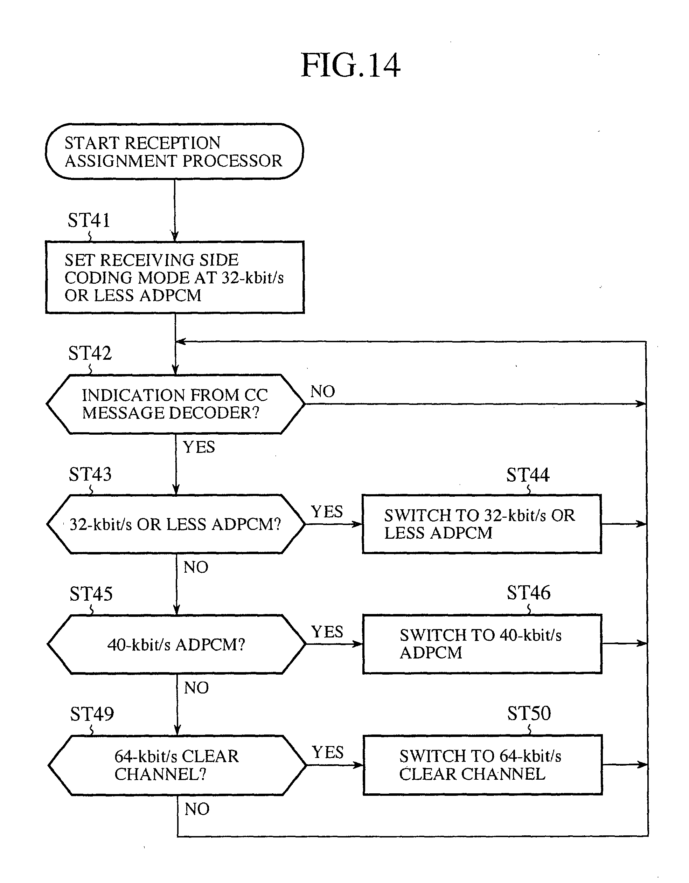

Next, the operation of the receiving-side apparatus 12 will be described. Fig. 14 is a flowchart illustrating the operation of the reception assignment processor 32 in the transmission apparatus of the present embodiment 3.

In the receiving-side apparatus 12, the ANSam signal detector 37 detects the ANSam signal defined by the V.8 protocol on each channel of the output signals to the trunk side, and notifies the transmission assignment processor 24 in the transmitting-side apparatus 11 of the fact that it detects the ANSam signal.

Although the reception assignment processor 32 of the receiving-side apparatus 12 operates in the same manner as that of the embodiment 1 (steps ST41-ST46, and steps ST49 and ST50), since the 64-kbit/s clear channel assignment request indication is not exchanged in the present embodiment 3, the processing associated with it (that is, steps ST47 and ST48) is not carried out.

Since the remaining operation of the receiving-side apparatus 12 in the transmission apparatus 1A or 1B of the present embodiment 3 is the same as that of the receiving-side apparatus 12 in the transmission apparatus 1A or 1B of the foregoing embodiment 1, the description thereof is omitted here.

As described above, the present embodiment 3 is configured such that it detects the specified signal like the ANSam signal in the output signals to the trunk side, thereby detecting the specified signal in the signals in both directions. Thus, besides the advantages of the foregoing embodiment 1, it offers an advantage of being able to switch the channels in both directions to the 64-kbit/s clear channels.

In addition, the present embodiment 3 is configured such that instead of transmitting to the opposite side equipment the 64-kbit/s clear channel assignment request indication or the decision result that the specified signal is detected in the input signal from the trunk side, it detects the specified signal in the output signal to the trunk side, thereby detecting the specified signal in the signals in both directions. Thus, the present embodiment 3 can eliminate the need for transmitting the 64-kbit/s clear channel assignment request indication or the detection information of the specified signal to the opposite side equipment. As a result, it offers an advantage of being able to prevent an increase in the message volume of the signals to be transmitted through the control channel.

### EMBODIMENT 4

The transmission apparatus 1A or 1B of the present embodiment 4 in accordance with the present invention 4 is configured such that instead of detecting the ANSam signal as the unique signal defined in the ITU recommendation V.8, it detects the V.21 channel No.1 modem signal.

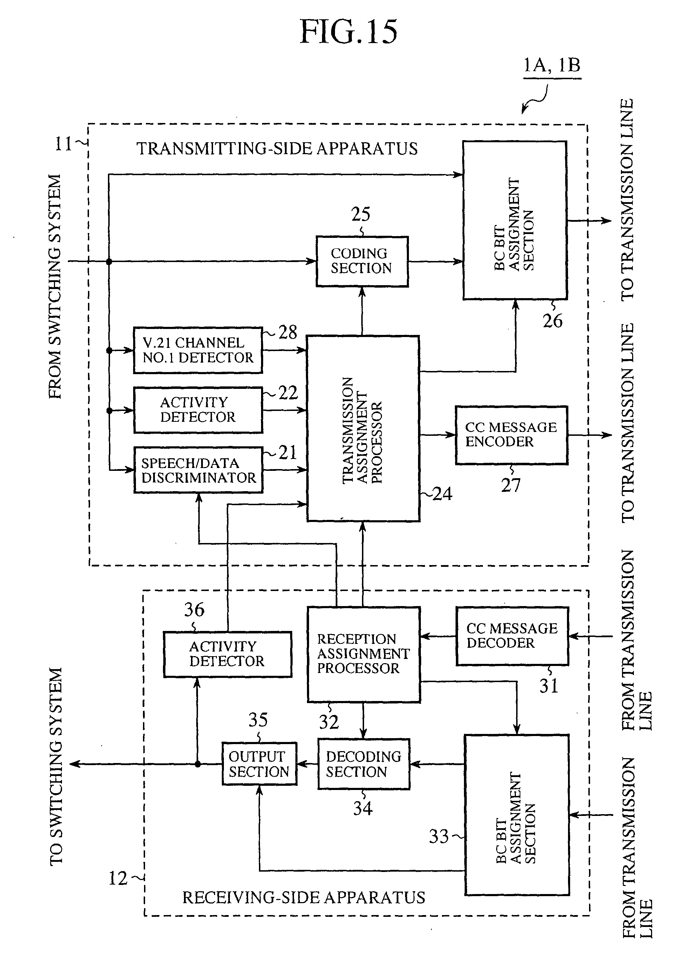

Fig. 15 is a block diagram showing a configuration of the transmission apparatus 1A or 1B of the present embodiment 4 in accordance with the present invention. In this figure, the reference numeral 28 designates a V.21 channel No.1 detector for making a decision, by analyzing the input signals from the trunk side, as to whether each channel of the input signals includes the V.21 channel No.1 modem signal transmitted from the facsimile terminals 5A-1 - 5A-m and 5B-1 - 5B-q. The V.21 channel No.1 modem signal is a signal modulated by the channel No.1 modulation scheme (the FSK (Frequency Shift Keying) modulation of the carrier frequency of 1080 Hz) specified by the ITU-T recommendation V.21.

Since the remaining components of Fig. 15 are the same as those of the foregoing embodiment 1, the description thereof is omitted here. Only, when the V.21 channel No.1 detector 28 detects the V.21 channel No.1 modem signal, the transmission assignment processor 24 of the transmitting-side apparatus 11 generates the 64-kbit/s clear channel assignment request for the channel on which the signal is detected, and supplies the CC message encoder 27 with the 64-kbit/s clear channel assignment request indication for the opposite channel corresponding to the channel on which the signal is detected.

Next, the operation of the present embodiment 4 will be described.

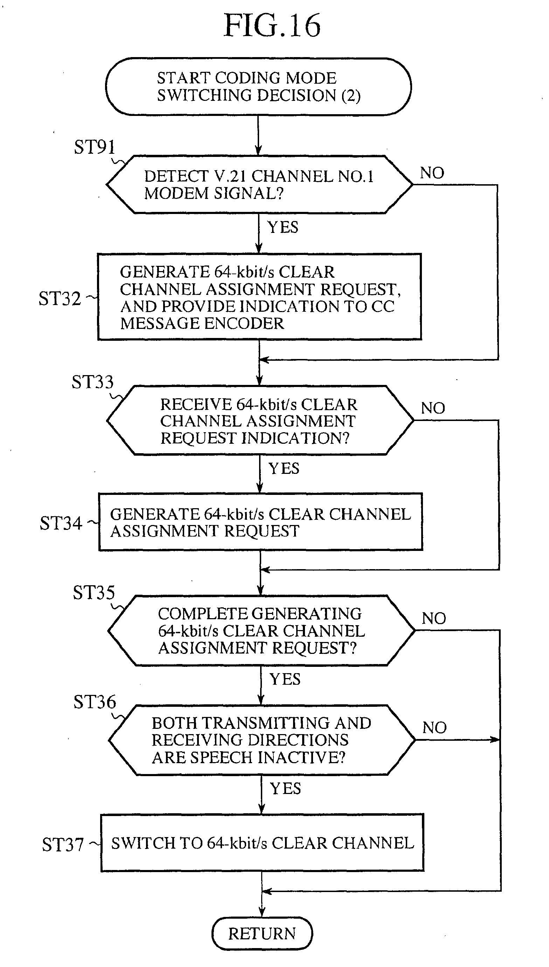

First, the operation of the transmitting-side apparatus 11 will be described. Fig. 16 is a flowchart illustrating the detail of the coding mode switching decision (2) by the transmission assignment processor 24 in the transmitting-side apparatus 11 of the present embodiment 4.

The V.21 channel No.1 detector 28, analyzing the input signals from the trunk side, makes a decision as to whether each channel of the input signals includes the V.21 channel No.1 modem signal transmitted from the facsimile terminals 5A-1 - 5A-m or 5B-1 - 5B-q, and supplies the decision result to the transmission assignment processor 24.

Then, the transmission assignment processor 24 makes a decision as to whether the V.21 channel No.1 detector 28 detects the V.21 channel No.1 modem signal in the coding mode switching decision (2) (step ST91). When the V.21 channel No.1 modem signal is detected, the transmission assignment processor 24 generates a 64-kbit/s clear channel assignment request for the channel on which the ANSam signal is detected. In addition, it supplies the CC message encoder 27 with a 64-kbit/s clear channel assignment request indication for the channel opposite in direction to the channel. Then, it searches for a vacant channel of the transmission signals until securing a 64-kbit/s worth channel to switch the channel to the 64-kbit/s clear channel afterward (step ST32).

Since the remaining operation of the transmitting-side apparatus 11 in the transmission apparatus 1A or 1B of the present embodiment 4 is the same as that of the transmitting-side apparatus 11 in the transmission apparatus 1A or 1B of the foregoing embodiment 1, the description thereof is omitted here.

Furthermore, since the operation of the receiving-side apparatus 12 is the same as that of the embodiment 1, the description thereof is omitted here.

Next, the operation of the transmission apparatuses 1A and 1B of the present embodiment 4 will be described, when the facsimile signal according to the V.34 procedure is supplied as the input signal. Here, the facsimile terminals on the calling side are assumed to be facsimile terminals 5A-i (i = 1,.., m), and the facsimile terminals on the called side are assumed to be facsimile terminal 5B-j (j = 1,.., q).

First, in the initial state before the facsimile signal according to the V.34 is input, the transmission assignment processor 24 places its channels at a coded channel according to the 32-kbit/s or less ADPCM scheme (step ST1), and the reception assignment processor 32 places its channels at a coded channel according to the 32-kbit/s or less ADPCM scheme (step ST41).

Thus, the coding mode of the coding section 25 and the decoding section 34 is initially set at the 32-kbit/s or less ADPCM scheme, so that the transmission of the transmission signals that are coded according to the 32-kbit/s or less ADPCM scheme is started.

Subsequently, when the calling side facsimile terminal 5A-i transmits the CI signal as shown in Fig. 8, the speech/data discriminator 21 of the transmitting-side apparatus 11 in the transmission apparatus 1A makes a decision that the signal type on the channel from the calling side to the called side is "data". Thus, the transmission assignment processor 24 of the transmission apparatus 1A sets the channel from the calling side to the called side at the coded channel according to the 40-kbit/s ADPCM scheme (step ST9).

In addition, the transmission assignment processor 24 in the transmission apparatus 1A causes the CC message encoder 27 to transmit to the transmission apparatus 1B the CC message including the coding mode information that the channel from the calling side to the called side is set at the coded channel according to the 40-kbit/s ADPCM scheme.

The CC message decoder 31 of the receiving-side apparatus 12 in the transmission apparatus 1B receives the CC message, and supplies the reception assignment processor 32 with the information about the coding mode that the channel from the calling side to the called side is set at the coded channel according to the 40-kbit/s ADPCM scheme. Being supplied with the information, the reception assignment processor 32 provides the decoding section 34 with an instruction to set the channel from the calling side to the called side at the coded channel according to the 40-kbit/s ADPCM scheme (step ST46).

Thus, the coding mode of the coding section 25 of the transmission apparatus 1A and that of the decoding section 34 of the transmission apparatus 1B are both set at the 40-kbit/s ADPCM scheme, and the channel from the calling side to the called side is switched to the coded channel according to the 40-kbit/s ADPCM scheme.

Furthermore, making a decision that the signal type on the channel from the calling side to the called side is "data" by the information about the coding mode fed from the CC message decoder 31, the reception assignment processor 32 of the receiving-side apparatus 12 in the transmission apparatus 1B notifies the speech/data discriminator 21 in the transmitting-side apparatus 11 of the fact. Thus, the speech/data discriminator 21 of the transmitting-side apparatus 11 produces the decision result "data", so that the transmission assignment processor 24 sets the channel from the called side to the calling side at the coded channel according to the 40-kbit/s ADPCM scheme (step ST9).

In addition, the transmission assignment processor 24 in the transmission apparatus 1B causes the CC message encoder 27 to transmit to the transmission apparatus 1A the information about the coding mode that the channel from the called side to the calling side is set at the coded channel according to the 40-kbit/s ADPCM scheme, as the CC message.

Receiving the CC message, the CC message decoder 31 of the receiving-side apparatus 12 in the transmission apparatus 1A supplies the reception assignment processor 32 with the information about the coding mode that the channel from the called side to the calling side is set at the coded channel according to the 40-kbit/s ADPCM scheme. Being supplied with the information, the reception assignment processor 32 provides the decoding section 34 with the instruction to set the channel from the called side to the calling side at the coded channel according to the 40-kbit/s ADPCM scheme (step ST46).

Thus, the coding mode of the coding section 25 of the transmission apparatus 1B and that of the decoding section 34 of the transmission apparatus 1A are both set at the 40-kbit/s ADPCM scheme, so that the channel from the called side to the calling side is switched to the coded channel according to the 40-kbit/s ADPCM scheme in the same manner as the channel from the calling side to the called side is switched.

After that, the V.21 channel No.1 modem signal, which is included in the CI signal transmitted from the calling side facsimile terminal 5A-i, is detected on the channel from the calling side to the called side by the V.21 channel No.1 detector 28 of the transmitting-side apparatus 11 in the transmission apparatus 1A. Thus, the transmission assignment processor 24 generates a 64-kbit/s clear channel assignment request for the channel, and supplies the CC message encoder 27 with the 64-kbit/s clear channel assignment request indication for the channel from the called side to the calling side. In addition, the transmission assignment processor 24 searches for a vacant channel of the transmission signals until the 64-kbit/s worth channel is secured in order to switch the channel to the 64-kbit/s clear channel afterward (step ST32).

The CC message encoder 27 of the transmitting-side apparatus 11 in the transmission apparatus 1A transmits the 64-kbit/s clear channel assignment request indication to the transmission apparatus 1B as the CC message.

Receiving the CC message, the CC message decoder 31 of the receiving-side apparatus 12 in the transmission apparatus 1B supplies the 64-kbit/s clear channel assignment request indication to the reception assignment processor 32 that transfers it to the transmission assignment processor 24 of the transmitting-side apparatus 11 (step ST48).

Then, receiving the 64-kbit/s clear channel assignment request indication, the transmission assignment processor 24 of the transmitting-side apparatus 11 in the transmission apparatus 1B generates a 64-kbit/s clear channel assignment request for the channel from the called side to the calling side, and then in order to switch the channel from the called side to the calling side to the 64-kbit/s clear channel afterward, it searches for a vacant channel for the transmission signals until it secures a 64-kbit/s worth channel (step ST34).

At this point of time, although the 64-kbit/s clear channel assignment request has been generated, since the channels in the two directions are not yet switched to the 64-kbit/s clear channels, they are still 40-kbit/s coded channels according to the ADPCM scheme.

After that, the calling side facsimile terminal 5A-i sends the CM signal and CJ signal, and the called side facsimile terminal 5B-j sends the JM signal. When the activity detectors 22 and 36 detect that both the channels from the calling side to the called side and from the called side to the calling side are in the inactive state, the transmission assignment processor 24 of the transmitting-side apparatus 11 in the transmission apparatus 1A switches the channel extending from the calling side to the called side to the 64-kbit/s clear channel, and the transmission assignment processor 24 of the transmitting-side apparatus 11 in the transmission apparatus 1B switches the channel extending from the called side to the calling side to the 64-kbit/s clear channel (step ST37). When the channels are switched to the 64-kbit/s clear channels, the CC message encoders 27 of both sides transmit to their opposite side equipment the CC message including the information about the coding mode.

Receiving the CC message including the information about the coding mode that the channel from the called side to the calling side is switched to the 64-kbit/s clear channel, the CC message decoder 31 of the receiving-side apparatus 12 in the transmission apparatus 1A supplies the information to the reception assignment processor 32. Being supplied with the information, the reception assignment processor 32 provides the BC bit assignment section 33 with the instruction to set the channel from the called side to the calling side at the 64-kbit/s clear channel (step ST50).

Likewise, receiving the CC message including the information about the coding mode that the channel from the calling side to the called side is switched to the 64-kbit/s clear channel, the CC message decoder 31 of the receiving-side apparatus 12 in the transmission apparatus 1B supplies the information to the reception assignment processor 32. Being supplied with the information, the reception assignment processor 32 provides the BC bit assignment section 33 with the instruction to set the channel from the calling side to the called side at the 64-kbit/s clear channel (step ST50).

Thus, both the channels from the called side to the calling side and from the calling side to the called side are switched to the 64-kbit/s clear channels, and the encoders and decoders according to the 40-kbit/s ADPCM scheme that have been assigned are relinquished. Therefore, the signal on the channel of the input signal is transmitted from the transmission apparatus 1A or 1B to the opposite side equipment, the transmission apparatus 1B or 1A, through the channel of the transmission signal without being encoded, and the opposite side equipment, the transmission apparatus 1B or 1A outputs the signal to the channel of the output signal without decoding them. Therefore, the subsequent transmission of the facsimile signals is carried out normally via the 64-kbit/s clear channels.

When the transmission and reception of the facsimile signal terminate, and both the transmitting and receiving directions become inactive state (step ST21), each transmission assignment processor 24 of the transmitting-side apparatuses 11 in the transmission apparatuses 1A and 1B enables the pause duration timer to start the measurement of a pause time period (step ST22). When the inactive state exceeds the predetermined time period, and the timer expires (step ST25), a decision is made that the call terminates, thereby switching the channels to the coded channel according to the 32-kbit/s or less ADPCM scheme (step ST26).

In this way, the V.34 facsimile signals are transmitted normally via the 64-kbit/s clear channels.

As described above, the present embodiment 4 is configured such that it detects the V.21 channel No.1 modem signal defined by the ITU recommendation V.8 as the specified signal in the prescribed startup procedure. As a result, besides the advantages of the foregoing embodiment 1, it offers an advantage of being able to detect the start of the V.34 modem transmission, and hence to switch to the channels that can carry out the V.34 modem transmission normally.

### EMBODIMENT 5

The transmission apparatus 1A or 1B of the present embodiment 5 in accordance with the present invention is configured such that when it detects the specified signal in the prescribed startup procedure of the facsimile signal, it switches the channel extending from the calling side to the called side to the 64-kbit/s clear channel, but it does not switch the channel extending from the called side to the calling side to the 64-kbit/s clear channel.

In other words, the transmission apparatus 1A or 1B of the present embodiment 5 can place the channel from the calling side to the called side and the channel from the called side to the calling side at different signal quality to meet the requirement to do so.

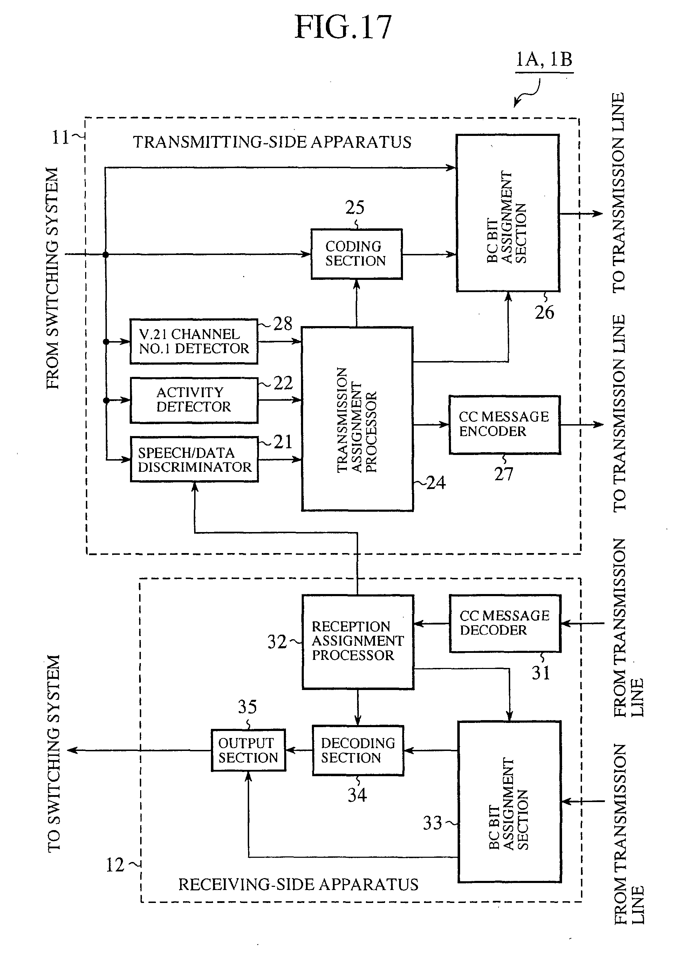

Fig. 17 is a block diagram showing a configuration of a transmission apparatus 1A or 1B of the present embodiment 5 in accordance with the present invention. Since the components as shown in Fig. 17 are the same as those of the foregoing embodiment 4, the description thereof is omitted here. Only, the transmission assignment processor 24 of the present embodiment 5 prevents the CC message encoder 27 from transmitting the 64-kbit/s clear channel assignment request indication to the opposite side equipment as the CC message.

Next, the operation of the present embodiment 5 will be described.

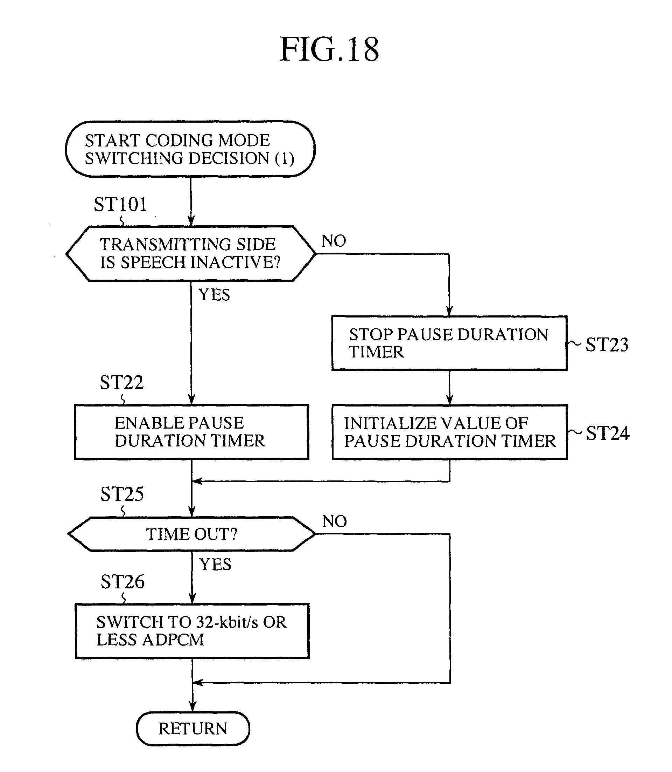

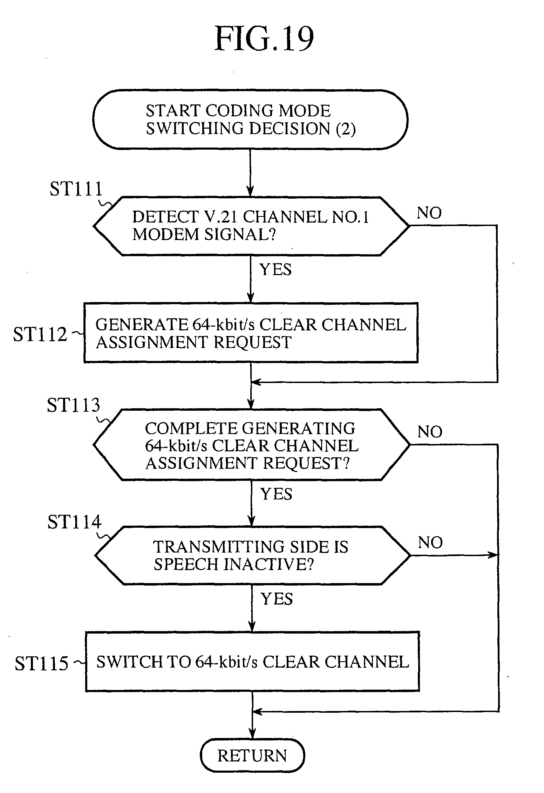

First, the operation of the transmitting-side apparatus 11 will be described. Fig. 18 is a flowchart illustrating the detail of the coding mode switching decision (1) by the transmission assignment processor 24 of the transmitting-side apparatus 11 in the present embodiment 5; and Fig. 19 is a flowchart illustrating the detail of the coding mode switching decision (2) by the transmission assignment processor 24 of the transmitting-side apparatus 11 in the present embodiment 5.

Although the transmission assignment processor 24 of the present embodiment 5 uses the decision result as to whether the input signal from the trunk side is in the inactive state or not for making a switching decision of the channel quality, it does not use the information about the active/inactive state of the output signal to the trunk side for making a switching decision of the channel quality.

More specifically, to make the coding mode switching decision (1) as to the 64-kbit/s clear channel, the transmission assignment processor 24 of the present embodiment 5 decides as to whether each channel of the input signals is in the inactive state or not by the decision result fed from the activity detector 22 (step ST101). When the inactive state exceeds the predetermined time period, the transmission assignment processor 24 switches the channel to the coded channel according to the 32-kbit/s ADPCM scheme (steps ST22 - ST26).

In addition, to make the coding mode switching decision (2) as to the coded channel according to the ADPCM scheme, the transmission assignment processor 24 decides as to whether the V.21 channel No.1 detector 28 detects the V.21 channel No.1 modem signal (step ST111). When it detects the V.21 channel No.1 modem signal, the transmission assignment processor 24 generates the 64-kbit/s clear channel assignment request for the channel on which the signal is detected. In addition, the transmission assignment processor 24 searches for a vacant channel of the transmission signals until the 64-kbit/s worth channel is secured in order to switch the channel to the 64-kbit/s clear channel afterward (step ST112).

Subsequently, the transmission assignment processor 24 makes a decision as to whether the 64-kbit/s clear channel assignment request has been generated or not (step ST113). When it has been generated, the transmission assignment processor 24 makes a decision as to whether the channel is in the inactive state or not by the activity decision result in the transmitting direction fed from the activity detector 22 (step ST114). When the channel is in the inactive state, the transmission assignment processor 24 switches the channel to the 64-kbit/s clear channel (step ST115).

On the other hand, when the 64-kbit/s clear channel assignment request has not yet been generated, or the channel is in the active state, the transmission assignment processor 24 terminates the coding mode switching decision (2).

In this way, the transmitting-side apparatus 11 of the present embodiment 5 switches the type of the channel, when the V.21 channel No.1 modem signal is detected in a facsimile signal on a channel of the input signals, and the channel is in the inactive state. However, the transmitting-side apparatus 11 of the embodiment 5 does not transmit to the opposite side equipment the CC message about the 64-kbit/s clear channel assignment request indication for the channel opposite to the channel for transmitting the facsimile signal.

Since the remaining operation of the transmitting-side apparatus 11 in the transmission apparatus 1A or 1B of the present embodiment 5 is the same as that of the transmitting-side apparatus 11 in the transmission apparatus 1A or 1B in the foregoing embodiment 4, the description thereof is omitted here.

Next, the operation of the receiving-side apparatus 12 will be described.

In the receiving-side apparatus 12 of the present embodiment 5, the activity decision for the output signal is not made. Furthermore, since the CC message including the 64-kbit/s clear channel assignment request indication for the channel that transmits the facsimile signal in the present embodiment 5 is not received from the opposite side equipment, the CC message decoder 31 does not carry out the receiving processing of the 64-kbit/s clear channel assignment request indication.

Since the remaining operation of the receiving-side apparatus 12 in the transmission apparatus 1A or 1B of the present embodiment 5 is the same as that of the receiving-side apparatus 12 in the transmission apparatus 1A or 1B of the foregoing embodiment 4, the description thereof is omitted here.

Next, the operation of the transmission apparatuses 1A and 1B of the present embodiment 5 will be described, when the facsimile signal according to the V.34 procedure is supplied as the input signal. Here, the facsimile terminals on the calling side are assumed to be facsimile terminals 5A-i (i = 1,.., m), and the facsimile terminals on the called side are assumed to be facsimile terminal 5B-j (j = 1,.., q).

First, in the initial state before the facsimile signal according to the V.34 is input, the transmission assignment processor 24 places its channels at a coded channel according to the 32-kbit/s or less ADPCM scheme (step ST1), and the reception assignment processor 32 places its channels at a coded channel according to the 32-kbit/s or less ADPCM scheme (step ST41).

Thus, the coding mode of the coding section 25 and the decoding section 34 is initially set at the 32-kbit/s or less ADPCM scheme, so that the transmission of the transmission signals that are coded according to the 32-kbit/s or less ADPCM scheme is started.

Subsequently, when the calling side facsimile terminal 5A-i transmits the CI signal as shown in Fig. 8, the speech/data discriminator 21 of the transmitting-side apparatus 11 in the transmission apparatus 1A makes a decision that the signal type on the channel from the calling side to the called side is "data". Thus, the transmission assignment processor 24 in the transmission apparatus 1A sets the channel from the calling side to the called side at the coded channel according to the 40-kbit/s ADPCM scheme (step ST9).

In addition, the transmission assignment processor 24 in the transmission apparatus 1A causes the CC message encoder 27 to transmit to the transmission apparatus 1B the CC message including the coding mode information that the channel from the calling side to the called side is set at the coded channel according to the 40-kbit/s ADPCM scheme.

The CC message decoder 31 of the receiving-side apparatus 12 in the transmission apparatus 1B receives the CC message, and supplies the reception assignment processor 32 with the information about the coding mode that the channel from the calling side to the called side is set at the coded channel according to the 40-kbit/s ADPCM scheme. Being supplied with the information, the reception assignment processor 32 provides the decoding section 34 with an instruction to set the channel from the calling side to the called side at the coded channel according to the 40-kbit/s ADPCM scheme (step ST46).

Thus, the coding mode of the coding section 25 of the transmission apparatus 1A and that of the decoding section 34 of the transmission apparatus 1B are both set at the 40-kbit/s ADPCM scheme, and the channel from the calling side to the called side is switched to the coded channel according to the 40-kbit/s ADPCM scheme.

Furthermore, making a decision that the signal type on the channel from the called side to the calling side is "data" by the information about the coding mode fed from the CC message decoder 31, the reception assignment processor 32 of the receiving-side apparatus 12 in the transmission apparatus 1B notifies the speech/data discriminator 21 in the transmitting-side apparatus 11 of the fact. Thus, the speech/data discriminator 21 of the transmitting-side apparatus 11 produces the decision result "data" , so that the transmission assignment processor 24 sets the channel from the called side to the calling side at the coded channel according to the 40-kbit/s ADPCM scheme (step ST9).

In addition, the transmission assignment processor 24 in the transmission apparatus 1B causes the CC message encoder 27 to transmit to the transmission apparatus 1A the information about the coding mode that the channel from the called side to the calling side is set at the coded channel according to the 40-kbit/s ADPCM scheme, as the CC message.

Receiving the CC message, the CC message decoder 31 of the receiving-side apparatus 12 in the transmission apparatus 1A supplies the reception assignment processor 32 with the information about the coding mode that the channel from the called side to the calling side is set at the coded channel according to the 40-kbit/s ADPCM scheme. Being supplied with the information, the reception assignment processor 32 provides the decoding section 34 with the instruction to set the channel from the called side to the calling side at the coded channel according to the 40-kbit/s ADPCM scheme (step ST46).

Thus, the coding mode of the coding section 25 of the transmission apparatus 1B and that of the decoding section 34 of the transmission apparatus 1A are both set at the 40-kbit/s ADPCM scheme, so that the channel from the called side to the calling side is switched to the coded channel according to the 40-kbit/s ADPCM scheme in the same manner as the channel from the calling side to the called side is switched.

After that, the V.21 channel No.1 detector 28 of the transmitting-side apparatus 11 in the transmission apparatus 1A detects, on the channel from the calling side to the called side, the V.21 channel No.1 modem signal that is included in the CI signal transmitted from the calling side facsimile terminal 5A-i. Thus, the transmission assignment processor 24 generates a 64-kbit/s clear channel assignment request for the channel, and searches for a vacant channel of the transmission signals until the 64-kbit/s worth channel is secured in order to switch the channel to the 64-kbit/s clear channel afterward (step ST112).

At this point of time, since the channels in the two directions are not yet switched to the 64-kbit/s clear channels, they still remain at the coded channels according to the 40-kbit/s ADPCM scheme.

Subsequently, when the activity detector 22 detects that the channel from the calling side to the called side is in the inactive state after the calling side facsimile terminal 5A-i sends the CI signal, the transmission assignment processor 24 of the transmitting-side apparatus 11 in the transmission apparatus 1A switches the channel extending from the calling side to the called side to the 64-kbit/s clear channel (step ST115). When the channel is switched to the 64-kbit/s clear channel, the CC message encoder 27 transmits the CC message including the information about the coding mode to the transmission apparatus 1B.

Receiving the CC message including the information about the coding mode that the channel from the calling side to the called side is switched to the 64-kbit/s clear channel, the CC message decoder 31 of the receiving-side apparatus 12 in the transmission apparatus 1B supplies the information to the reception assignment processor 32. Being supplied with the information, the reception assignment processor 32 provides the BC bit assignment section 33 with the instruction to set the channel extending from the calling side to the called side to the 64-kbit/s clear channel (step ST50).

Thus, the channel from the calling side to the called side is switched to the 64-kbit/s clear channel, and the encoder and decoder according to the 40-kbit/s ADPCM scheme that have been assigned are relinquished. Accordingly, the signal on the channel of the input signals is transmitted from the transmission apparatus 1A to the opposite side equipment, the transmission apparatus 1B, through the channel of the transmission signal without being encoded, and the opposite side equipment, the transmission apparatus 1B outputs it to the channel of the output signal without decoding it. Afterward, the facsimile signal from the calling side to the called side is transmitted via the 64-kbit/s clear channel, and the facsimile signal from the called side to the calling side is transmitted via the 40-kbit/s clear channel.

In this case, since only a low rate (300 bit/s) modem signal is transmitted from the called side to calling side without transmitting the image data of the facsimile signal, the coded channel according to the 40-kbit/s ADPCM scheme can transmit it without any problem.

After that, when the transmission of the facsimile signal terminates, and the channel of the input signal from the trunk side to the transmission apparatus 1A becomes inactive state (step ST101), the pause duration timer is enabled to start measuring the pause time period (step ST22). When the inactive state exceeds the predetermined time period, and the timer expires (step ST25), a decision is made that the call terminates. Thus, the transmitting-side apparatus 11 in the transmission apparatus 1A switches the channel to the coded channel according to the 32-kbit/s or less ADPCM scheme (step ST26).

In this way, the V.34 facsimile signal is transmitted from the calling side to the called side via the 64-kbit/s clear channel, and from the called side to the calling side via the coded channel according to the 40-kbit/s ADPCM scheme.

As described above, the present embodiment 5 is configured such that it transmits the facsimile signal from the calling side to the called side via the 64-kbit/s clear channel, and from the called side to the calling side via the coded channel according to the 40-kbit/s ADPCM scheme with a bit transmission rate lower than that of the 64-kbit/s clear channel. As a result, besides the advantages of the foregoing embodiment 1, it offers an advantage of being able to improve the efficiency of utilizing the channels of the transmission lines 3.

Moreover, the present embodiment 5 is configured such that it does not switch the channel to the 64-kbit/s clear channel immediately after it detects the unique signal, but only after the channel of the input signal becomes inactive state. As a result, it offers an advantage of being able to ameliorate the problem in that it sometimes cannot assign the 64-kbit/s channel, and hence hinders normal communication.

In addition, the present embodiment 5 is configured such that it monitors the active/inactive state of the channel of the input signal, and makes a decision that the call terminates when the inactive state continues for more than the predetermined time period. Therefore, it offers an advantage of being able to switch the quality of the channel only after the call terminates.

### EMBODIMENT 6

The transmission apparatus 1A or 1B of the present embodiment 6 in accordance with the present invention is configured such that when it detects a unique signal in the prescribed startup procedure on a channel, it switches the channel to a coded channel based on higher quality codec such as the codec for ITU V.34 modem signal transmission instead of switching the channel to the 64-kbit/s clear channel.

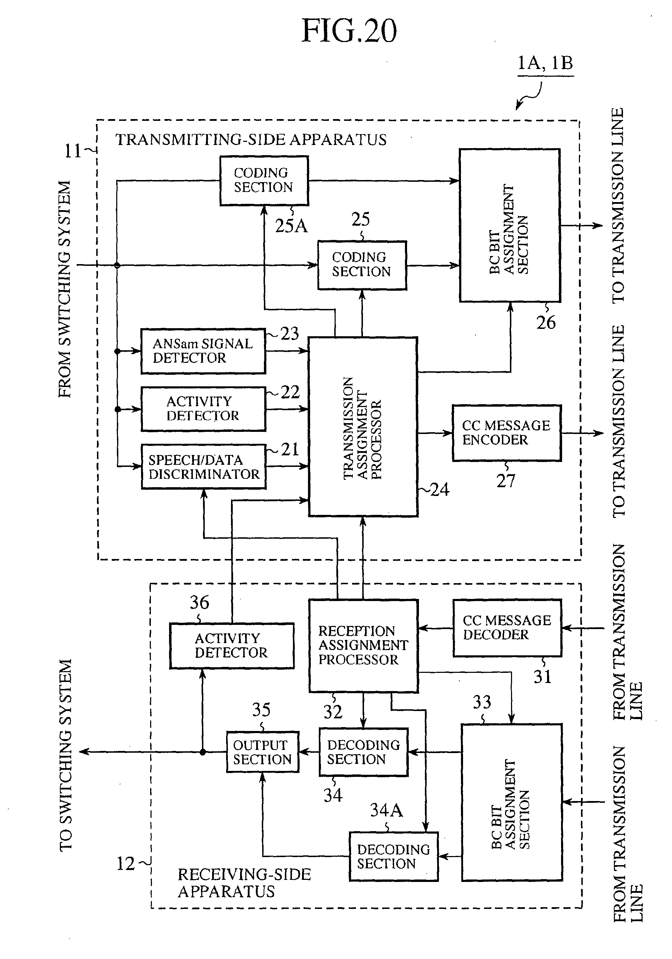

Fig. 20 is a block diagram showing a configuration of a transmission apparatus 1A or 1B of the embodiment 6 in accordance with the present invention. In this figure, the reference numeral 25A designates a coding section comprising a predetermined number of encoders each for coding the signal on a channel of the input signals according to the codec for ITU V.34 modem signal transmission; and 34A designates a decoding section comprising a predetermined number of decoders each for decoding the signal coded according to the codec for ITU V.34 modem signal transmission.

Since the remaining components of Fig. 20 are the same as those of the foregoing embodiment 1, the description thereof is omitted here. Only, the transmission assignment processor 24 in the present embodiment 6 assigns the channel of the input signals, on which the ANSam signal is detected, to one of the encoders in the coding section 25A, and causes the BC bit assignment section 26 to assign the encoder to a channel of the transmission lines 3. On the other hand, receiving from the opposite side equipment the CC message including the information about the coding mode that the switching is made to the coded channel according to the codec for ITU V.34 modem signal transmission, the reception assignment processor 32 in the present embodiment 6 causes the BC bit assignment section 33 to assign the channel of the transmission signal to one of the decoders in the decoding section 34A, and the decoding section 34A to decode the signal of the channel, thereby outputting the decoded signal to the corresponding channel of the output signal.

Next, the operation of the present embodiment 6 will be described.

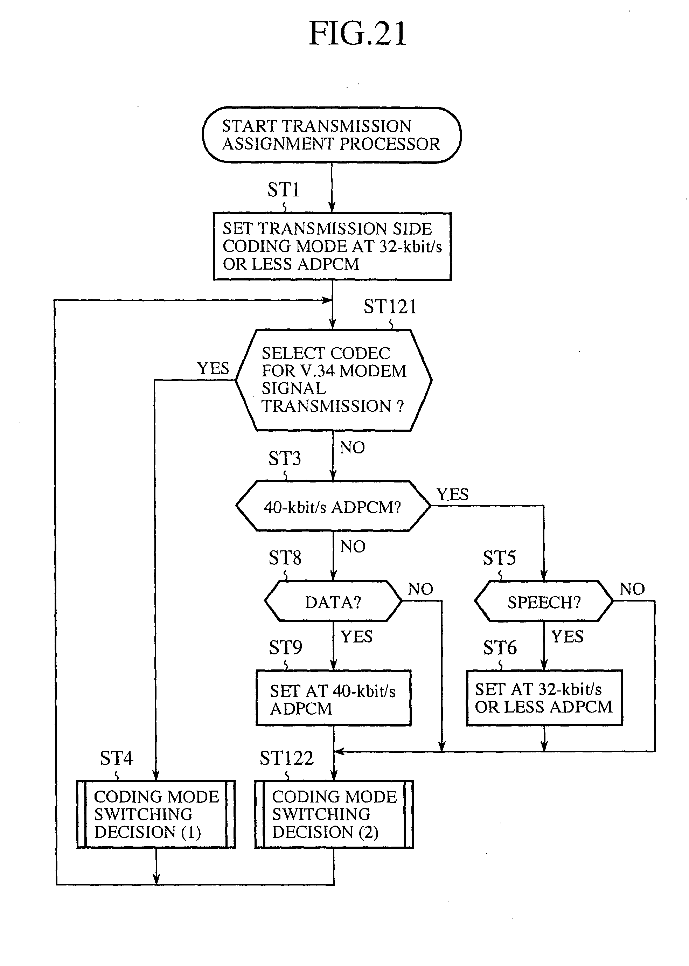

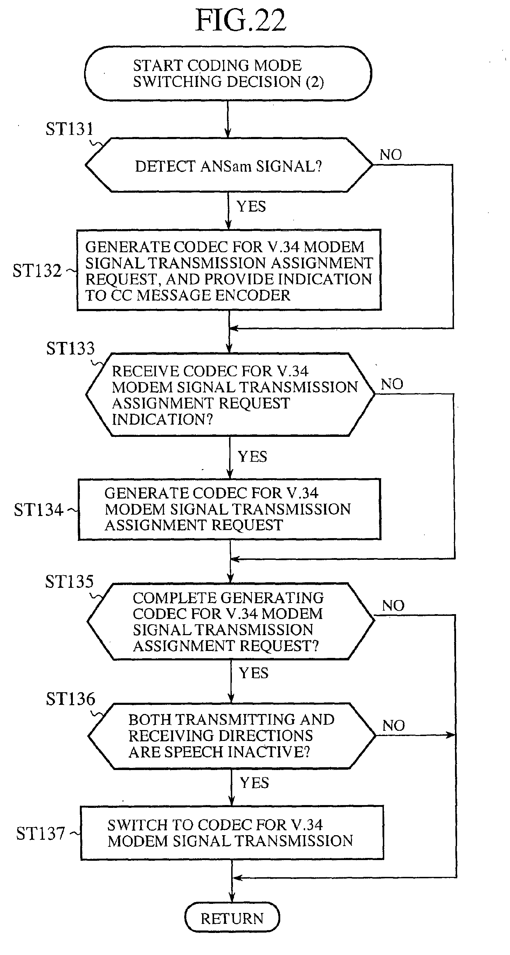

First, the operation of the transmitting-side apparatus 11 will be described. Fig. 21 is a flowchart illustrating the operation of the transmission assignment processor 24 in the transmission apparatus of the present embodiment 6; and Fig. 22 is a flowchart illustrating the detail of the coding mode switching decision (2) in Fig. 21.

The transmission assignment processor 24 in the present embodiment 6 assigns the channels of the input signals on which the ANSam signal is detected to the encoders of the coding section 25A, and causes the BC bit assignment section 26 to assign the encoders of the coding section 25A to the channels of the transmission lines 3. In contrast with this, the transmission assignment processor 24 assigns the other channels of the input signals to encoders of the coding section 25, and causes the BC bit assignment section 26 to assign the encoders to the channels of the transmission lines 3.

In other words, the coding section 25 is assigned the channels that carry the input signals from the trunk side whose signal types are a speech signal or a modem signal according to the V.17 and slower protocols, and then the channels are assigned to the encoders of the coding section 25 by the assignment indication fed from the transmission assignment processor 24.

Each encoder of the coding section 25 codes the signal of the channel according to the coding mode (coding scheme and coding bit rate) indicated by the transmission assignment processor 24, and supplies the signal passing through the coding to the BC bit assignment section 26.

In this case, the encoders of the coding section 25 employ the 40-kbit/s, 32-kbit/s, 24-kbit/s or 16-kbit/s ADPCM scheme specified by the ITU recommendation G.726 as the coding scheme. When the signal type is data, the signal of the channel undergoing the decision by the speech/data discriminator 21 is coded by the 40-kbit/s coding rate, and when the signal type is speech, the signal of the channel undergoing the decision by the speech/data discriminator 21 is coded by the 32-kbit/s, 24-kbit/s or 16-kbit/s coding rate.

On the other hand, the coding section 25A is assigned the channels that carry the input signals from the trunk side whose signal types are the V.34 modem signal, and then the channels are assigned to the encoders of the coding section 25A by the assignment indication fed from the transmission assignment processor 24.

Each encoder of the coding section 25A codes the signal of the channel according to the coding mode (coding scheme and coding bit rate) indicated by the transmission assignment processor 24, and supplies the signal passing through the coding to the BC bit assignment section 26.

In this case, the encoders of the coding section 25A employ as their coding scheme, a scheme with higher quality than the 40-kbit/s ADPCM scheme defined by the ITU recommendation G.726, thereby offering sufficient quality for transmitting the ITU V.34 modem signal.

The CC message encoder 27 transmits the following information to the opposite side equipment through the control channel of the transmission lines 3 as the CC message: the map information on the assignment relationships between the channels of the trunk side signals and the channels of the transmission signals; the codec for ITU V.34 modem signal transmission assignment request indication as needed; and the coding modes of individual channels (including the coded channels according to the codec for ITU V.34 modem signal transmission).

Subsequently, the operation of the transmission assignment processor 24 will be described with reference to Figs. 21 and 22. Here, as in the foregoing embodiment 1, the control of the coding bit rate depending on the number of the vacant channels of the transmission signals is omitted, and the 32-kbit/s, 24-kbit/s or 16-kbit/s ADPCM scheme are handled together as the 32-kbit/s or less ADPCM scheme. It is obvious, however, that the coding bit rate can be switched in accordance with the ratio of the vacant channels of the transmission signals as in the foregoing embodiment 1.

First, the transmission assignment processor 24 provides the coding section 25 with the coding mode indication according to the 32-kbit/s or less ADPCM scheme to place the quality of the transmission signals in the initial state (step ST1).

Subsequently, the transmission assignment processor 24 makes a decision as to whether the individual channels of the transmission signals are a coded channel according to the codec for V.34 modem signal transmission, a coded channel according to the 40-kbit/s ADPCM scheme or a coded channel according the 32-kbit/s or less ADPCM scheme (steps ST2 and ST3).

As to the coded channel according to the codec for V.34 modem signal transmission, the transmission assignment processor 24 makes the coding mode switching decision (1) in the same manner as to the 64-kbit/s clear channel in the foregoing embodiment 1 (step ST4).

On the other hand, as to the coded channel according to the 40-kbit/s ADPCM scheme, the transmission assignment processor 24 makes a decision on whether the signal of the channel is a speech signal or not by the decision result fed from the speech/data discriminator 21 (step ST5). When the signal of the channel is the speech signal, it switches the channel to the coded channel according to the 32-kbit/s or less ADPCM scheme (step ST6). Afterward, the transmission assignment processor 24 carries out the coding mode switching decision (2) which will be described later (step ST122).

As to the coded channel according to the 32-kbit/s or less ADPCM scheme, the transmission assignment processor 24 makes a decision on whether the signal of the channel is a voice band data signal or not by the decision result fed from the speech/data discriminator 21 (step ST8). When the signal of the channel is the voice band data signal, it switches the channel to the coded channel according to the 40-kbit/s ADPCM scheme (step ST9). Afterward, the transmission assignment processor 24 makes the coding mode switching decision (2) which will be described later (step ST122).

Subsequently, after making the coding mode switching decision (1) or the coding mode switching decision (2), the transmission assignment processor 24 returns to step ST121, thereby iterating the foregoing processing.

Next, referring to Fig. 22, the coding mode switching decision (2) as to the coded channel according to the ADPCM scheme will be described. As for the coding mode switching decision (1) of the coded channel according to the codec for ITU V.34 modem signal transmission, since it is made in the same manner as that of the 64-kbit/s clear channel in the foregoing embodiment 1, the description thereof is omitted here.

In the coding mode switching decision (2), the transmission assignment processor 24 makes a decision for each channel as to whether the ANSam signal is detected or not by the decision result fed from the ANSam signal detector 23 (step ST131). When the ANSam signal is detected, the transmission assignment processor 24 generates a codec for V.34 modem signal transmission assignment request for the channel on which the ANSam signal is detected. In addition, it supplies the CC message encoder 27 with a codec for V.34 modem signal transmission assignment request indication for the channel opposite in direction to that channel. Then, it searches for a vacant channel of the transmission signals until securing a channel with the bit rate needed for the codec for V.34 modem signal transmission, to switch the channel on which the ANSam signal is detected to the codec for V.34 modem signal transmission afterward (step ST132).

Here, at the time when the ANSam signal is detected, switching to the coded channel according to the codec for V.34 modem signal transmission is not made immediately, but only the codec for V.34 modem signal transmission assignment request is generated to carry out the switching later. This is because at the time when the ANSam signal is detected, it is likely that the channel satisfying the bit rate of the codec for V.34 modem signal transmission cannot be secured immediately depending on the congestion of the channels of the transmission signals, and hence it is necessary to wait for the channels now in use to be relinquished to positively secure the channel satisfying the bit rate of the codec for V.34 modem signal transmission.

Furthermore, the transmission assignment processor 24 makes a decision for each channel as to whether the reception assignment processor 32 notifies it of the codec for V.34 modem signal transmission assignment request indication sent from the opposite side equipment (step ST133). Being notified of the codec for V.34 modem signal transmission assignment request indication sent from the opposite side equipment, the transmission assignment processor 24 generates the codec for V.34 modem signal transmission assignment request for the channel. Then, it searches for a vacant channel of the transmission signals until securing a channel satisfying the bit rate of the codec for V.34 modem signal transmission, to switch the channel to the coded channel according to the codec for V.34 modem signal transmission (step ST134).

Subsequently, the transmission assignment processor 24 makes a decision as to whether the codec for V.34 modem signal transmission assignment request has been generated or not (step ST135). When it has been generated, the transmission assignment processor 24 makes a decision as to whether the channels in both directions are in the inactive state or not (step ST136) by the activity decision result in the transmitting direction fed from the activity detector 22 and by the activity decision result in the receiving direction fed from the activity detector 36 in the receiving-side apparatus 12. When the channels in both directions are in the inactive state, the transmission assignment processor 24 switches the channels in both directions to the coded channels according to the codec for V.34 modem signal transmission (step ST137).

On the other hand, when the codec for V.34 modem signal transmission assignment request has not yet been generated, or at least one of the channels in both directions is in the active state, the transmission assignment processor 24 terminates the coding mode switching decision (2).

In this way, the coding mode switching decision (2) is made.

In brief, the coding mode switching decision (1) makes a decision as to the switching from the coded channel according to the codec for V.34 modem signal transmission to the coded channel according to the ADPCM scheme, whereas the coding mode switching decision (2) makes a decision as to the switching from the coded channel according to the ADPCM scheme to the coded channel according to the codec for V.34 modem signal transmission.

Thus operates the transmission assignment processor 24.

Since the remaining operation of the transmitting-side apparatus 11 in the transmission apparatus 1A or 1B of the present embodiment 6 is the same as that of the transmitting-side apparatus 11 in the transmission apparatus 1A or 1B of the foregoing embodiment 1, the description thereof is omitted here.

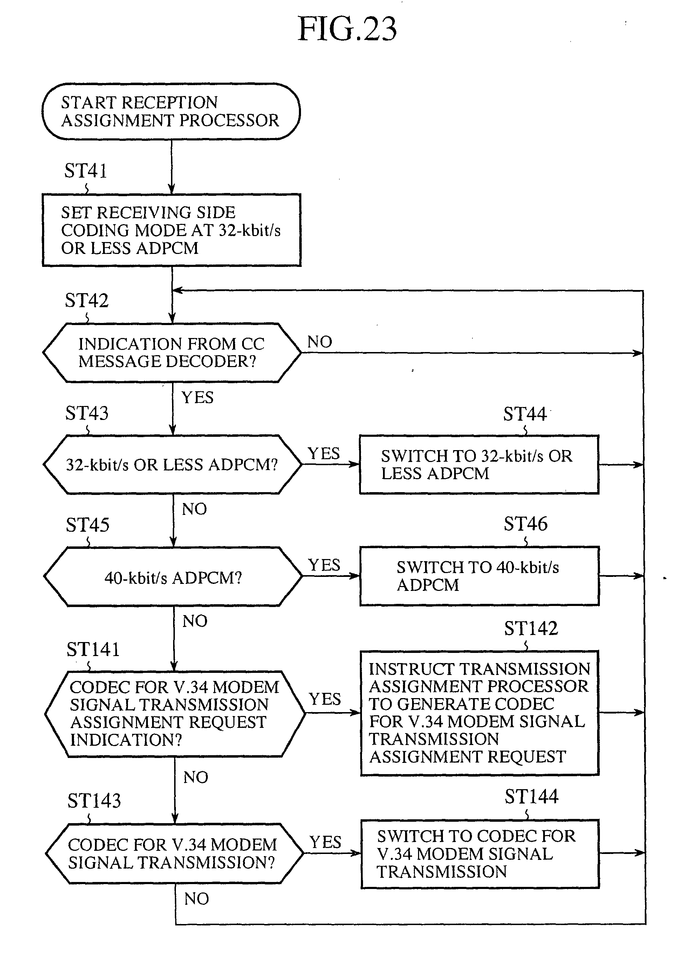

Next, the operation of the receiving-side apparatus 12 will be described. Fig. 23 is a flowchart illustrating the operation of the reception assignment processor 32 in the present embodiment 6 of the transmission apparatus.

Receiving the CC message from the opposite side equipment via the control channel of the transmission lines 3, the CC message decoder 31 extracts from the CC message the map information on the assignment relationships between the channels of the transmission signals and the channels of the signals on the trunk side (output signals of the receiving-side apparatus), the codec for V.34 modem signal transmission assignment request indication when present, and the information about the coding modes of individual channels, and supplies them to the reception assignment processor 32.

In response to the map information fed from the CC message decoder 31, the reception assignment processor 32 supplies the BC bit assignment section 33 and the decoding section 34 with the assignment indication between the channels of the transmission signals and the decoders of the decoding sections 34 and 34A and the channels of the output signals.

Specifically, the reception assignment processor 32 causes the BC bit assignment section 33 to assign the decoders of the decoding section 34A to the coded channels according to the codec for V.34 modem signal transmission, and the decoders of the decoding section 34 to the other channels, among the channels of the transmission signals sent from the opposite side equipment.

Thus, being assigned the channel whose signal type is a speech signal or a modem signal according to the V.17 and slower procedures among the channels of the transmission signals sent from the opposite side equipment, each decoder of the decoding section 34 decodes the signal of the assigned channel in response to the coding mode indicated by the reception assignment processor 32, and assigns and supplies the decoded signal to a channel of the output signals on the trunk side. The coding mode used by the decoders of the decoding section 34 is assumed to be identical to that used by the encoders of the coding section 25 in the opposite side equipment.

Likewise, being assigned the channel whose signal type is the ITU V.34 modem signal among the channels of the transmission signals sent from the opposite side equipment, each decoder of the decoding section 34A decodes the signal on the assigned channel in response to the coding mode indicated by the reception assignment processor 32, and assigns and supplies the decoded signal to a channel of the output signals on the trunk side. The coding mode used by the decoders of the decoding section 34A is assumed to be identical to that used by the encoders of the coding section 25A in the opposite side equipment.

When supplied with the codec for V.34 modem signal transmission assignment request indication from the CC message-decoder 31, the reception assignment processor 32 transfers the codec for V.34 modem signal transmission assignment request indication to the transmission assignment processor 24. Receiving the codec for V.34 modem signal transmission assignment request indication, the transmission assignment processor 24 switches the designated channel to the coded channel according to the codec for V.34 modem signal transmission as described above.

In addition, in response to the coding modes of individual channels supplied from the CC message decoder 31, the reception assignment processor 32 makes a decision as to whether the signal types of the individual channels of the transmission signals are a speech or data, and supplies the decision results to the speech/data discriminator 21 in the transmitting-side apparatus 11.

For example, the signal type on the channel with a coding mode of 32-kbit/s, 24-kbit/s or 16-kbit/s ADPCM scheme is decided as a "speech", whereas the signal type on the channel with a coding mode of 40-kbit/s ADPCM scheme is decided as "data".

Next, the operation of the reception assignment processor 32 will be described in more detail with reference to the flowchart of Fig. 23. Incidentally, the description of the control of the coding bit rate in accordance with the number of vacant channels of the transmission signals is omitted here, so that the 32-kbit/s, 24-kbit/s or 16-kbit/s ADPCM scheme is handled collectively as the 32-kbit/s or less ADPCM scheme.

First, the reception assignment processor 32 provides the decoding section 34 with the coding mode indication according to the 32-kbit/s or less ADPCM scheme to place the quality of the transmission signals at their initial state (step ST41).

Subsequently, the reception assignment processor 32 makes a decision as to whether it is supplied with the contents of the CC message received by the CC message decoder 31 or not (step ST42). When supplied with the contents of the received CC message from the CC message decoder 31, and when the contents include the information about the coding mode of the channel of the transmission signal, the reception assignment processor 32 makes a decision as to whether the coding mode of the channel is the 32-kbit/s or less ADPCM scheme (step ST43). When the coding mode is the 32-kbit/s or less ADPCM scheme, the reception assignment processor 32 supplies the decoding section 34 with the instruction to switch the channel to the coded channel according to the 32-kbit/s or less ADPCM scheme (step ST44).

Subsequently, the reception assignment processor 32 makes a decision as to whether the coding mode of the channel is the 40-kbit/s ADPCM scheme (step ST45). When the coding mode is the 40-kbit/s ADPCM scheme, the reception assignment processor 32 supplies the decoding section 34 with the instruction to switch the channel to the coded channel according to the 40-kbit/s ADPCM scheme (step ST46).

Then, the reception assignment processor 32 makes a decision as to whether the contents of the CC message include the codec for V.34 modem signal transmission assignment request indication (step ST141). When the codec for V.34 modem signal transmission assignment request indication is present, the reception assignment processor 32 transfers it to the transmission assignment processor 24 in the transmitting-side apparatus 11 (step ST142).

Finally, the reception assignment processor 32 makes a decision as to whether the contents include the information about the coding mode of the channel of the transmission signal, and whether the coding mode is the codec for V.34 modem signal transmission or not (step ST143). When the coding mode is the codec for V.34 modem signal transmission, the reception assignment processor 32 supplies the BC bit assignment section 33 and the decoding section 34A with the instruction to switch the channel to the coded channel according to the codec for V.34 modem signal transmission (step ST144).

Thus operates the reception assignment processor 32.

Since the remaining operation of the receiving-side apparatus 12 in the transmission apparatus 1A or 1B of the present embodiment 6 is the same as that of the receiving-side apparatus 12 in the transmission apparatus 1A or 1B of the foregoing embodiment 1, the description thereof is omitted here.

As described above, the present embodiment 6 is configured such that it encodes the signals of the channels, from which the specified signal in the prescribed startup procedure is detected, according to the codec for V.34 modem signal transmission, and the remaining signals of the channels according to the ADPCM scheme, and transmits the signals of the channels passing through the coding to the opposite side equipment as the transmission signals. As a result, it offers an advantage of being able to transmit signals such as the V.34 facsimile signal or the V.34 modem signal normally, which cannot be transmitted normally via the coded channel according to the 40-kbit/s ADPCM scheme, through the higher quality 64-kbit/s clear channel.

In addition, the present embodiment 6 is configured such that it utilizes the higher quality codec for the channel on which the unique signal in the prescribed startup procedure is detected, instead of switching the channel to the 64-kbit/s clear channel. It offers an advantage of being able to improve the used efficiency of the channels of the transmission signals.

### EMBODIMENT 7

The transmission apparatus 1A or 1B of the present embodiment 7 in accordance with the present invention 7 is configured such that when the unmodulated 2100 Hz tone signal is detected on a channel of the input signals, it inhibits the switching of the channel to the 64-kbit/s clear channel.

The foregoing embodiment 4 switches, when detecting the V.21 channel No.1 modem signal, the channel to the 64-kbit/s clear channel regardless of whether the unmodulated 2100 Hz tone signal is present or not. Accordingly, when the V.21 channel No.1 modem signal is detected after the unmodulated 2100 Hz tone signal in the low-speed data communication according to the V.21 modem instead of the ITU V.34 modem standard, the switching of the channel quality to the 64-kbit/s clear channel is made, although even the coded channel according to the 40-kbit/s ADPCM scheme can achieve the transmission. In view of this, when detecting the unmodulated 2100 Hz tone signal on a channel of the input signals, the transmission apparatus 1A or 1B of the present embodiment 7 inhibits the switching of the channel to the 64-kbit/s clear channel, thereby suppressing the reduction in the efficiency in using the channels of the transmission signals.

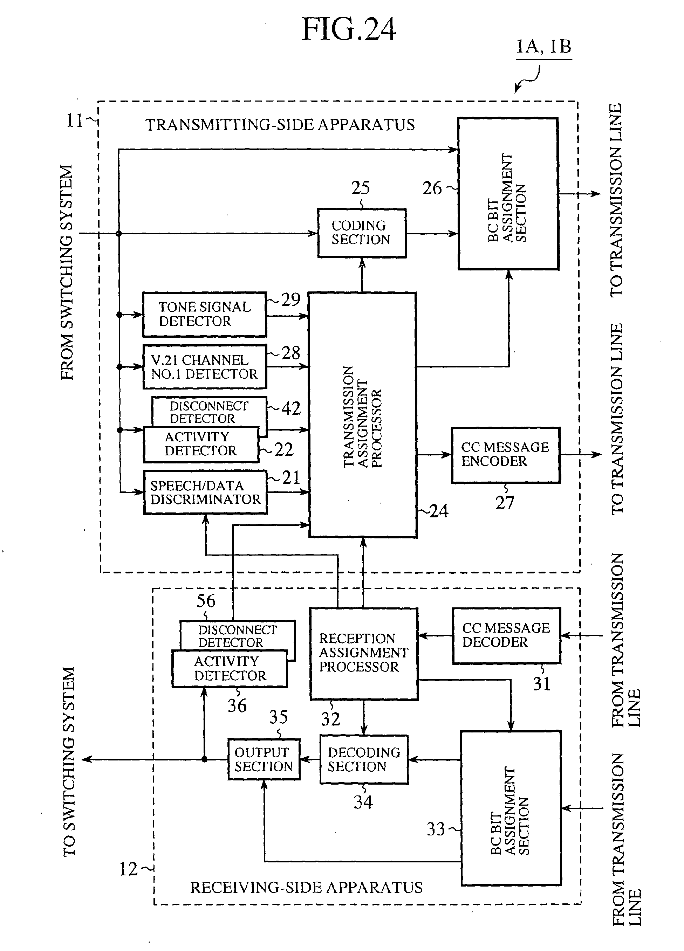

Fig. 24 is a block diagram showing a configuration of the transmission apparatus 1A or 1B of the present embodiment 7 in accordance with the present invention. In this figure, the reference numeral 29 designates a tone signal detector for analyzing the input signal from the trunk side, and for deciding as to whether the CED signal (the called terminal identification signal) occurs in each channel of the input signals. Here, the CED signal is the unmodulated 2100 Hz tone signal sent from the facsimile terminals 5A-1 - 5A-m and 5B-1 - 5B-q. Incidentally, as to the reference numerals 42 and 56, they will be described in the next embodiment 8.

Since the remaining components of Fig. 24 are the same as those of the foregoing embodiment 4, the description thereof is omitted here. Only, when the tone signal detector 29 detects the unmodulated 2100 Hz tone signal on a channel of the input signals, the transmission assignment processor 24 inhibits the switching of the channel to the 64-kbit/s clear channel.

Next, the operation of the present embodiment 7 will be described.

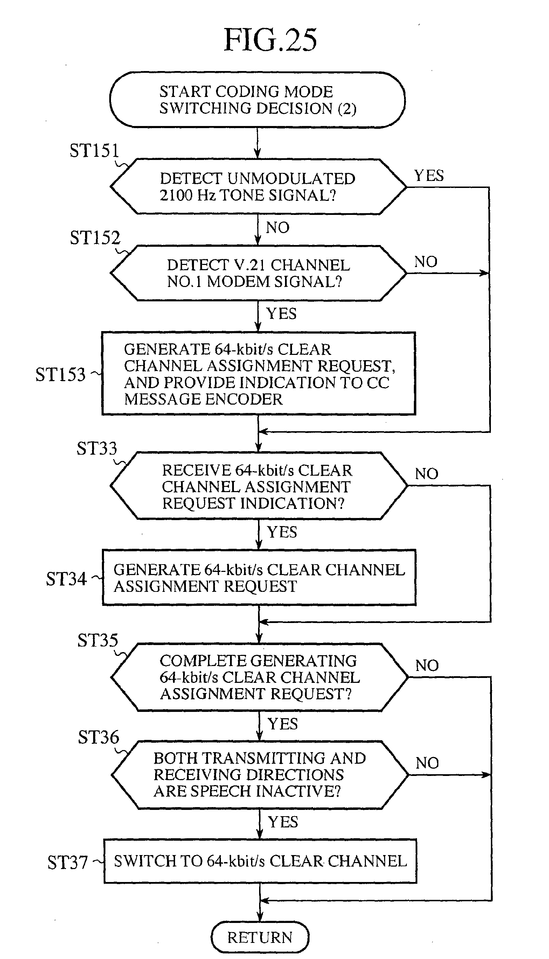

First, the operation of the transmitting-side apparatus 11 will be described. Fig. 25 is a flowchart illustrating the detail of the coding mode switching decision (2) by the transmission assignment processor 24 of the transmitting-side apparatus 11 of the present embodiment 7.

In the transmitting-side apparatus 11 of the embodiment 7, the tone signal detector 29 analyzes the input signal from the trunk side, makes a decision as to whether the CED signal (the called terminal identification signal), the unmodulated 2100 Hz tone signal, is present on each channel of the input signals, and supplies the decision result to the transmission assignment processor 24.

The transmission assignment processor 24 makes a decision as to whether the tone signal detector 29 detects the unmodulated 2100 Hz tone signal in the coding mode switching decision (2) as to the coded channel according to the ADPCM scheme (step ST151). When it detects the unmodulated 2100 Hz tone signal, the transmission assignment processor 24 skips the detection decision of the V.21 channel No.1 modem signal (steps ST152 and ST153).

On the other hand, when the unmodulated 2100 Hz tone signal is not detected, the transmission assignment processor 24 makes a decision as to whether the V.21 channel No. 1 detector 28 detects the V.21 channel No.1 modem signal or not (step ST152). When it detects the V.21 channel No.1 modem signal, the transmission assignment processor 24 generates the 64-kbit/s clear channel assignment request for the channel on which the signal is detected, and supplies the CC message encoder 27 with the 64-kbit/s clear channel assignment request indication for the channel on which the signal is detected. In addition, the transmission assignment processor 24 searches for vacant channels of the transmission signals until the 64-kbit/s worth channel is secured (step ST153) to switch the channel to the 64-kbit/s clear channel afterward.

Since the remaining operation of the transmitting-side apparatus 11 in the transmission apparatus 1A or 1B in the present embodiment 7 is the same as that of the transmitting-side apparatus 11 in the transmission apparatus 1A or 1B of the embodiment 4, the description thereof is omitted here.

Besides, the operation of the receiving-side apparatus 12 is the same as that of the embodiment 4, the description thereof is omitted here.

As described above, the embodiment 7 is configured such that when it detects the unmodulated 2100 Hz tone signal on a channel of the input signals, it inhibits the switching of the channel to the 64-kbit/s clear channel. As a result, it offers an advantage of being able to improve the efficiency in utilizing the channels of the transmission signals.

### EMBODIMENT 8

The transmission apparatus 1A or 1B of the present embodiment 8 in accordance with the present invention comprises disconnect detectors 42 and 56 as shown in Fig. 24. The disconnect detector 42 detects a disconnect signal by monitoring the transmission and reception protocol of the facsimile signal or data-modem signal in the input signal, whereas the disconnect detector 56 detects a disconnect signal by monitoring the facsimile signal or data-modem signal in the transmission signal from the opposite side equipment. When they detect the disconnect signal, the transmission apparatus 1A or 1B switches the high quality channel (64-kbit/s clear channel or the coded channel according to the codec for ITU V.34 modem signal transmission) of the signal to the low quality coded channel (the coded channel according to the 32-kbit/s or less ADPCM scheme).

As described above, the present embodiment 8 is configured such that it monitors the transmission and reception protocol, and when detecting the disconnect signals, it switches the quality of the channels of the input and transmission signals. As a result, it offers an advantage of being able to switch the quality of the channels more positively than when switching the channels if the inactive state continues more than the predetermined time period, thereby improving the efficiency in utilizing the channels of the transmission signals.

### EMBODIMENT 9

The transmission apparatus 1A or 1B of the present embodiment 9 in accordance with the present invention is configured such that when it detects a new call connection on a high quality channel (64-kbit/s clear channel or coded channel according to the codec for ITU V.34 modem signal transmission), it switches the channel to a low quality channel (coded channel according to the 32-kbit/s or less ADPCM scheme).

Incidentally, since the 2000 Hz tone signal is used as a channel continuity test signal at the call connect in the No.6 or No.7 signaling, a decision is made that the new call connection is detected when the tone signal detector 29 as shown in Fig. 24 detects the tone signal.

As described above, the present embodiment 9 is configured such that when a new call connection is detected on a high quality channel, it switches the channel to a low quality channel. As a result, it offers an advantage of being able to switch the channel to a low quality channel positively, even if the duration of the inactive state of the high quality channel is insufficient because the high quality channel is used again soon after the call release.

### EMBODIMENT 10

The transmission apparatus 1A or 1B of the present embodiment 10 in accordance with the present invention is configured such that when the tone signal detector 29 as shown in Fig. 24 detects the CED or CNG signal on the high quality channel, it switches the channel to the low quality channel.

As described above, the CNG signal and CED signal are a signal that is transmitted at the initial stage in the procedure of the facsimile signal defined in the ITU recommendation T.30. Accordingly, a decision can be made that a new call takes place when one of the signals are detected.

As described above, the present embodiment 10 is configured such that when it detects the CED or CNG signal on the high quality channel, it switches the channel to the low quality channel. As a result, it offers an advantage of being able to switch the channel to a low quality channel positively, even if the duration of the inactive state of the high quality channel is insufficient because the high quality channel is used again soon after the call release.

### EMBODIMENT 11

The transmission apparatus 1A or 1B of the present embodiment 11 in accordance with the present invention is configured such that when the tone signal detector 29 as shown in Fig. 24 detects the tone signal of a specified frequency used in the No.5 signaling on the high quality channel, it switches the channel to the low quality channel.

In the No.5 signaling, the following signals are transmitted. At the call connection procedure, a 2400 Hz seizure signal is transmitted from a calling side to a called side, and a 2600 Hz proceed-to-send signal is transmitted from the called side to the calling side. At the disconnect procedure, a clear-forward signal with a 2400 Hz and 2600 Hz dual tone is transmitted from the calling side to the called side, and a release-guard signal with a 2400 Hz and 2600 Hz dual tone is transmitted from the called side to the calling side. Thus, detecting the tone signals, the present embodiment 11 makes a decision that a new disconnect or a new call connection takes place, and switches the channel of the signal to a low quality channel.

As described above, the embodiment 11 is configured such that when it detects the tone signal of a specified frequency used in the No.5 signaling on the high quality channel, it switches the channel to a low quality channel. As a result, it offers an advantage of being able to switch the channel to a low quality channel positively, even if the duration of the inactive state of the high quality channel is insufficient because the high quality channel is used again soon after the call release.

### EMBODIMENT 12

The transmission apparatus 1A or 1B of the present embodiment 12 in accordance with the present invention is configured such that it transmits a signal on a high quality channel in the form of an ATM (Asynchronous Transfer Mode) cell through an ATM network serving as a transmission line, instead of transmitting it via a bearer line.

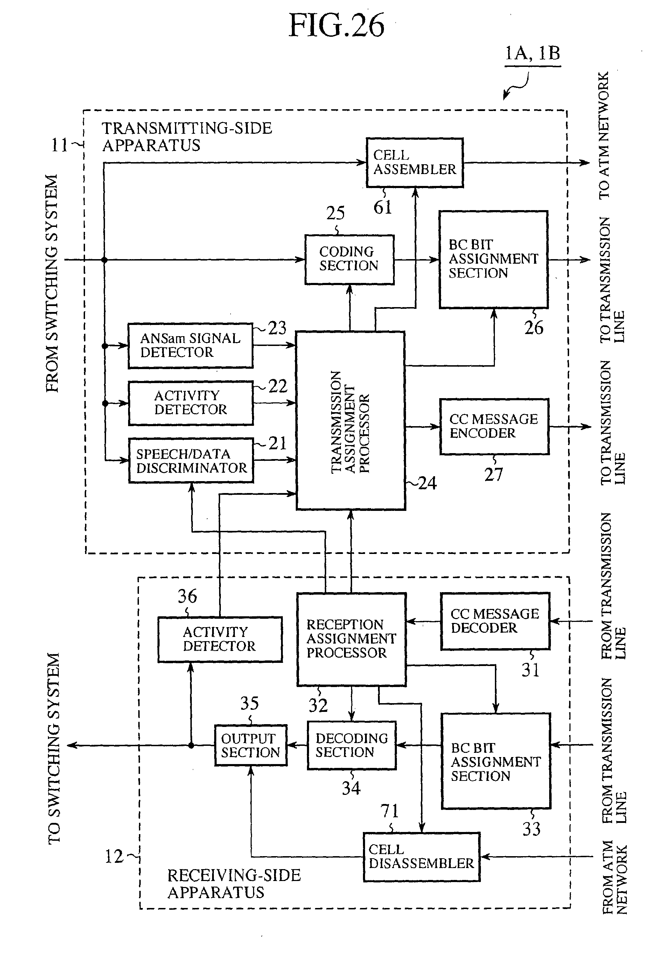

Fig. 26 is a block diagram showing a configuration of the transmission apparatus 1A or 1B of the present embodiment 12 in accordance with the present invention. In this figure, the reference numeral 61 designates a cell assembler that is assigned a channel of the input signals fed from the trunk side by the transmission assignment processor 24, and assembles a cell from the signal to be output as an ATM cell; and 71 designates a cell disassembler that receives an ATM cell, disassembles the ATM cell, and supplies the channel of the output signals assigned by the reception assignment processor 32 with the disassembled signal through the output section 35.

Since the remaining components of Fig. 26 are the same as those of the foregoing embodiment 1, the description thereof is omitted here. Only, the BC bit assignment section 26 in the transmitting-side apparatus 11 assigns only the encoders of the coding section 25 to the channels of the transmission signals on the bearer lines, and the BC bit assignment section 33 in the receiving-side apparatus 12 assigns only the channels of the transmission signals on the bearer lines to the decoders of the decoding section 34.

Next, the operation of the present embodiment 12 will be described.

First, the operation of the transmitting-side apparatus 11 will be described.

In response to the information from the speech/data discriminator 21, activity detector 22, ANSam signal detector 23, reception assignment processor 32 and activity detector 36, the transmission assignment processor 24 supplies the encoders of the coding section 25, BC bit assignment section 26, CC message encoder 27 and cell assembler 61 with various control signals.

When a decision is made that the signal on a channel of the input signals from the trunk side is not a modem signal according to the ITU V.34, and that the channel is in the active state by the activity detector 22, the transmission assignment processor 24 assigns the channel to one of the available encoders in the coding section 25 as in the foregoing embodiment 1, and assigns the encoder to an available channel of the transmission signals on the bear lines.

On the other hand, when a decision is made that the signal on a channel of the input signals from the trunk side is a modem signal according to the ITU V.34, the transmission assignment processor 24 sets the channel at a 64-kbit/s clear channel, assigns the channel to the cell assembler 61, and instructs the cell assembler 61 to assemble the cell from the signal on the channel. The cell assembler 61 assembles a cell from the signal of the channel, and transmits the ATM cell generated to the opposite side equipment via the ATM network.

Since the remaining operation of the transmitting-side apparatus 11 in the transmission apparatus 1A or 1B of the present embodiment 12 is the same as that of the transmitting-side apparatus 11 in the transmission apparatus 1A or 1B of the foregoing embodiment 1, the description thereof is omitted here.

Next, the operation of the receiving-side apparatus 12 will be described.

In response to the information from the CC message decoder 31, the reception assignment processor 32 supplies the speech/data discriminator 21, transmission assignment processor 24, BC bit assignment section 33, the decoding section 34 and cell disassembler 71 with various control signals.

In response to the indication from the reception assignment processor 32, the BC bit assignment section 33 assigns the individual channels of the transmission signals on the bearer lines that constitute the coded channels according to the ADPCM scheme, to the decoders of the decoding section 34 and to the channels of the output signals on the trunk side.

On the other hand, receiving an ATM cell transmitted via the ATM network, the cell disassembler 71 restores a signal of the 64-kbit/s clear channel by disassembling the cell in accordance with the indication fed from the reception assignment processor 32, and assigns the signal passing through the disassembly to a channel of the output signals on the trunk side without decoding it, to be output.

As described above, the present embodiment 12 is configured such that it transmits the high quality signal of the channel via the ATM network. As a result, even when the ratio of data calls from V.34 high-speed modems to the input signals from the trunk side increases, the present embodiment 12 can suppress an increase in the occupancy ratio of the bearer lines due to an increase in the channels used between the BC bit assignment sections 26 and 33, thereby offering an advantage of being able to improve the efficiency in utilizing the channels of the transmission lines 3.

### EMBODIMENT 13

The transmission apparatus 1A or 1B of the present embodiment 13 in accordance with the present invention is configured such that it transmits a high quality signal of the channel via an IP (Internet Protocol) network.

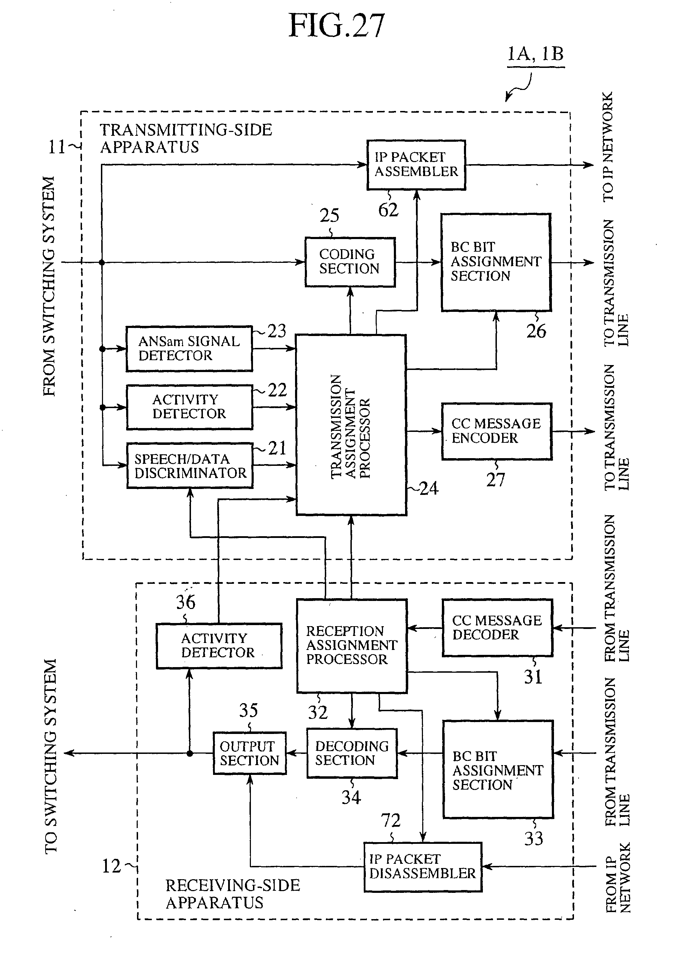

Fig. 27 is a block diagram showing a configuration of the transmission apparatus 1A or 1B of the present embodiment 13 in accordance with the present invention. In this figure, the reference numeral 62 designates an IP packet assembler for assembling an IP packet for the opposite side equipment from the signal on a channel, which is assigned to the IP packet assembler by the transmission assignment processor 24 from among the input signals fed from the trunk side, and for outputting it to the IP network; and 72 designates an IP packet disassembler for receiving an IP packet from the opposite side equipment, for restoring the original signal by disassembling the IP packet, and for supplying the channel of the output signals assigned by the reception assignment processor 32 with the restored signal through the output section 35.

Since the remaining components of Fig. 27 are the same as those of the foregoing embodiment 1, the description thereof is omitted here. Only, the BC bit assignment section 26 in the transmitting-side apparatus 11 assigns only the encoders of the coding section 25 to the channels of the transmission signals, and the BC bit assignment section 33 in the receiving-side apparatus 12 assigns only the channels of the transmission signals to the decoders of the decoding section 34.

Next, the operation of the present embodiment 13 will be described.

First, the operation of the transmitting-side apparatus 11 will be described.

In response to the information from the speech/data discriminator 21, activity detector 22, ANSam signal detector 23, reception assignment processor 32 and activity detector 36, the transmission assignment processor 24 supplies the encoders of the coding section 25, BC bit assignment section 26, CC message encoder 27 and IP packet assembler 62 with various control signals.

When a decision is made that a signal on a channel of the input signals from the trunk side is not a modem signal according to the ITU V.34, and that the channel is in the active state by the activity detector 22, the transmission assignment processor 24 assigns the channel to one of the available encoders in the coding section 25 as in the foregoing embodiment 1, and assigns the encoder to an available channel of the transmission signals on the bear lines.

On the other hand, when a decision is made that a signal on a channel of the input signals from the trunk side is a modem signal according to the ITU V.34, the transmission assignment processor 24 sets the channel at a 64-kbit/s clear channel, assigns the channel to the IP packet assembler 62, and instructs the IP packet assembler 62 to assemble the IP packet from the signal on the channel.

The IP packet assembler 62 assembles the IP packet from the signal of the channel, and transmits the IP packet to the opposite side equipment via the ATM network.

Since the remaining operation of the transmitting-side apparatus 11 in the transmission apparatus 1A or 1B of the present embodiment 13 is the same as that of the transmitting-side apparatus 11 in the transmission apparatus 1A or 1B of the foregoing embodiment 1, the description thereof is omitted here.

Next, the operation of the receiving-side apparatus 12 will be described.

In response to the information from the CC message decoder 31, the reception assignment processor 32 supplies the speech/data discriminator 21, transmission assignment processor 24, BC bit assignment section 33, the decoding section 34 and IP packet disassembler 72 with various control signals.

In response to the indication from the reception assignment processor 32, the BC bit assignment section 33 assigns the individual channels of the transmission signals on the bearer lines constituting the coded channels according to the ADPCM scheme, to the decoders of the decoding section 34 and to the channels of the output signals on the trunk side.

On the other hand, receiving an IP packet for this equipment transmitted via the IP network, the IP packet disassembler 72 restores a signal of the 64-kbit/s clear channel by disassembling the IP packet in accordance with the indication fed from the reception assignment processor 32, and assigns the signal to a channel of the output signals on the trunk side without decoding it, to be output.

As described above, the present embodiment 13 is configured such that it transmits the high quality signal of the channel via the IP network. As a result, even when the ratio of data calls from V.34 high-speed modems to the input signals from the trunk side increases, the present embodiment 13 can suppress an increase in the occupancy ratio of the bearer lines due to an increase in the channels used between the BC bit assignment sections 26 and 33, thereby offering an advantage of being able to improve the efficiency in utilizing the channels of the transmission lines 3.

### EMBODIMENT 14

The transmission apparatus 1A or 1B of the present embodiment 14 in accordance with the present invention transmits all transmission signals in the form of ATM cells via the ATM network.

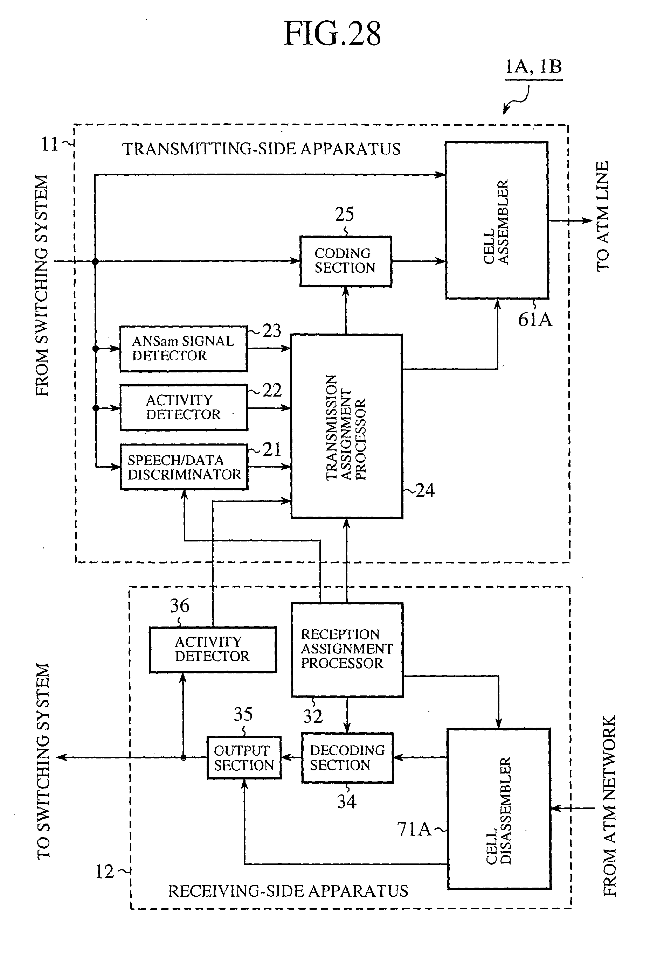

Fig. 28 is a block diagram showing a configuration of the transmission apparatus 1A or 1B of the embodiment 14 in accordance with the present invention. In this figure, the reference numeral 61A designates a cell assembler that assembles cells directly from the signals on channels, which are assigned to the cell assembler 61A by the transmission assignment processor 24 from among the input signals fed from the trunk side, and that assembles cells from the other signals on the channels which are coded by the coding section 25, and outputs the cells as ATM cells; and 71A designates a cell disassembler that receives ATM cells, disassembles the ATM cells, outputs the signals on the channels assigned to the disassembler 71A from among the signals passing through the disassembly by the reception assignment processor 32, via the output section 35 without change, and supplies the signals on the other channels to the decoders in the decoding section 34.

Since the remaining components of Fig. 28 are the same as those of the foregoing embodiment 1, the description thereof is omitted here.

Next, the operation of the present embodiment 14 will be described.

First, the operation of the transmitting-side apparatus 11 will be described.

In response to the information from the speech/data discriminator 21, activity detector 22, ANSam signal detector 23, reception assignment processor 32 and activity detector 36, the transmission assignment processor 24 supplies the encoders of the coding section 25 and cell assembler 61A with various control signals.

In response to the decision result by the ANSam signal detector 23, or to the 64-kbit/s clear channel assignment request indication sent from the opposite side equipment and supplied via the reception assignment processor 32, the transmission assignment processor 24 makes a decision as to whether the individual channels of the input signals fed from the trunk side carry a modem signal according to the modulation scheme defined by the ITU recommendation V.34. If the decision result is positive, the transmission assignment processor 24 sets each of the channels of the V.34 modem signal at a 64-kbit/s clear channel, assigns the channels directly to the cell assembler 61A, and supplies the signals to the cell assembler 61A without coding them. Then, the transmission assignment processor 24 instructs the cell assembler 61A to assemble cells from the signals.

On the other hand, as for the channels other than the channels carrying the V.34 modem signal, that is, as for the channels among the coded channels according to the ADPCM scheme, as to which the activity detector 22 makes a decision that they are in the active state, the transmission assignment processor 24 assigns them to available encoders in the coding section 25, and causes it to supply the signals coded by the encoders to the cell assembler 61A. Then, the transmission assignment processor 24 instructs the cell assembler 61A to assemble the signals into cells.

The cell assembler 61A assembles the cells from the signals passing through the coding by the coding section 25, or from the input signals, and transmits the ATM cells to the opposite side equipment via the ATM network.

As for the information corresponding to the CC message transmitted from the CC message encoder 27 in the foregoing embodiment 1, the cell assembler 61A assembles a cell from the information in the present embodiment 14, and transmits the cell to the opposite side equipment via the ATM network.

Since the remaining operation of the transmitting-side apparatus 11 in the transmission apparatus 1A or 1B of the present embodiment 14 is the same as that of the transmitting-side apparatus 11 in the transmission apparatus 1A or 1B of the foregoing embodiment 1, the description thereof is omitted here.

Next, the operation of the receiving-side apparatus 12 will be described.

The reception assignment processor 32 supplies the speech/data discriminator 21, transmission assignment processor 24, the decoding section 34 and cell disassembler 71A with various control signals.

Receiving ATM cells transmitted via the ATM network, the cell disassembler 71A disassembles them, and assigns resultant signals of the 64-kbit/s clear channels to channels of the output signals on the trunk side to be output. Besides, the cell disassembler 71A assigns the signals on the other channels to the decoders of the decoding section 34.

As for the information corresponding to the CC message the CC message decoder 31 receives in the foregoing embodiment 1, the information is received via the ATM network in the present embodiment 14, disassembled by the cell disassembler 71A, and supplied to the reception assignment processor.

Since the remaining operation of the receiving-side apparatus 12 in the transmission apparatus 1A or 1B of the present embodiment 14 is the same as that of the receiving-side apparatus 12 in the transmission apparatus 1A or 1B of the foregoing embodiment 1, the description thereof is omitted here.

As described above, the present embodiment 14 offers advantages similar to those of the foregoing embodiment 1.

### EMBODIMENT 15

The transmission apparatus 1A or 1B of the present embodiment 15 in accordance with the present invention transmits all transmission signals in the form of IP packets via the IP network.

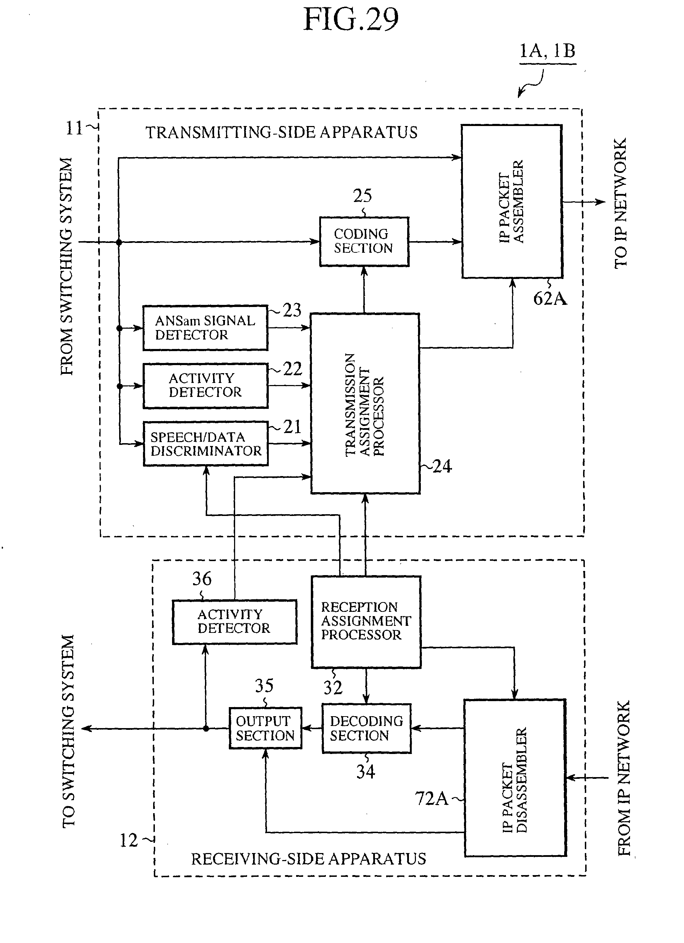

Fig. 29 is a block diagram showing a configuration of the transmission apparatus 1A or 1B of the embodiment 15 in accordance with the present invention. In this figure, the reference numeral 62A designates an IP packet assembler that assembles an IP packet directly from the signal on a channel assigned to the IP packet assembler 62A by the transmission assignment processor 24 from among the input signals fed from the trunk side, assembles an IP packet for the opposite side equipment from each signal on the other channels coded by the coding section 25, and supplies the IP packets to the IP network; and 72A designates an IP packet disassembler that disassembles IP packets which are transmission signals, and restores the original signals, and that outputs from among the restored signals the signals on the channels assigned by the reception assignment processor 32 via the output section 35 without change, and supplies the signals on the other channels to the decoders in the decoding section 34.

Since the remaining components of Fig. 29 are the same as those of the foregoing embodiment 1, the description thereof is omitted here.

Next, the operation of the present embodiment 15 will be described.

First, the operation of the transmitting-side apparatus 11 will be described.

In response to the information fed from the speech/data discriminator 21, activity detector 22, ANSam signal detector 23, reception assignment processor 32 and activity detector 36, the transmission assignment processor 24 supplies the encoders of the coding section 25 and IP packet assembler 62A with various control signals.

In response to the decision result by the ANSam signal detector 23, or to the 64-kbit/s clear channel assignment request indication sent from the opposite side equipment and supplied via the reception assignment processor 32, the transmission assignment processor 24 makes a decision as to whether the individual channels of the input signals from the trunk side carry a modem signal according to the modulation scheme defined by the ITU recommendation V.34. If the decision result is positive, the transmission assignment processor 24 sets each channel of the V.34 modem signal at a 64-kbit/s clear channel, assigns the channel directly to the IP packet assembler 62A, and supplies the signal to the IP packet assembler 62A without coding it. Then, the transmission assignment processor 24 instructs the IP packet assembler 62A to assemble an IP packet from the signal.

On the other hand, as for the channels other than the channels carrying the V.34 modem signal, that is, the channels as to which the activity detector 22 makes a decision that they are in the active state among the coded channels according to the ADPCM scheme, the transmission assignment processor 24 assigns these channels to available encoders in the coding section 25, and causes it to supply the signals coded by the encoders to the IP packet assembler 62A. Then, the transmission assignment processor 24 instruct the IP packet assembler 62A to assemble the signals into IP packets.

The IP packet assembler 62A assembles IP packets from the signals passing through the coding by the coding section 25, or from the input signals, and transmits the IP packets to the opposite side equipment via the IP network.

As for the information corresponding to the CC message transmitted from the CC message encoder 27 in the foregoing embodiment 1, the IP packet assembler 62A assembles an IP packet from the information in the present embodiment 15, and transmits the IP packet to the opposite side equipment via the IP network.

Since the remaining operation of the transmitting-side apparatus 11 in the transmission apparatus 1A or 1B of the present embodiment 15 is the same as that of the transmitting-side apparatus 11 in the transmission apparatus 1A or 1B of the foregoing embodiment 1, the description thereof is omitted here.

Next, the operation of the receiving-side apparatus 12 will be described.

The reception assignment processor 32 supplies the speech/data discriminator 21, transmission assignment processor 24, decoding section 34 and IP packet disassembler 72A with various control signals.

Receiving IP packets transmitted via the IP network, the IP packet disassembler 72A disassembles them, and assigns the resultant signals of the 64-kbit/s clear channels to channels of the output signals on the trunk side without decoding them to be output. Besides, the IP packet disassembler 72A assigns the signals on the other channels to the decoders of the decoding section 34.

As for the information corresponding to the CC message the CC message decoder 31 receives in the foregoing embodiment 1, it is received via the IP network in the present embodiment 15, disassembled by the IP packet disassembler 72A, and supplied to the reception assignment processor 32.

Since the remaining operation of the receiving-side apparatus 12 in the transmission apparatus 1A or 1B of the present embodiment 15 is the same as that of the receiving-side apparatus 12 in the transmission apparatus 1A or 1B of the foregoing embodiment 1, the description thereof is omitted here.

As described above, the present embodiment 15 offers advantages similar to those of the foregoing embodiment 1.

### EMBODIMENT 16

Although the foregoing embodiments 1-15 transmit facsimile signals and data-modem signals that can be transmitted correctly at a low transmission bit rate by coding them, and transmit the facsimile signals and data-modem signals that require a high transmission bit rate through 64-kbit/s clear channels or coded channels with high quality codec, this is not essential. For example, the facsimile signals and data-modem signals can be demodulated so that the demodulated signals can be transmitted.

## Claims

1. A transmission apparatus comprising:
specified signal detecting means (23 or 28) for detecting a specified signal according to one of V.8 protocol and V.8bis protocol from an input signal consisting of one of a speech signal and a voice band data signal; and
transmitting means (24 and 26) for transmitting the input signal to opposite side equipment as a transmission signal via a transmission line such that the transmission signal has different quality depending on whether said specified signal detecting means detects the specified signal or not.

2. The transmission apparatus according to claim 1, wherein said specified signal detecting means consists of an ANSam signal detector (23) for detecting an ANSam signal in a prescribed startup procedure.

3. The transmission apparatus according to claim 1, wherein said specified signal detecting means consists of a V.21 channel No.1 detector (28) for detecting a V.21 channel No.1 modem signal in a prescribed startup procedure.

4. The transmission apparatus according to claim 3, further comprising first tone signal detecting means (29) for detecting an unmodulated 2100 Hz tone signal from the input signal, wherein
said transmitting means inhibits, when said first tone signal detecting means detects the unmodulated 2100 Hz tone signal, the transmission signal from being transmitted in a quality in which said transmitting means transmits the transmission signal when said specified signal detecting means detects the specified signal.

5. The transmission apparatus according to claim 1, further comprising coding means (25) for coding the input signal consisting of one of the speech signal and voice band data signal in a predetermined coding mode, wherein
said transmitting means transmits the input signal as the transmission signal with maintaining the quality of the input signal when said specified signal detecting means detects the specified signal, and transmits a signal coded by said coding means in a predetermined quality as the transmission signal when said specified signal detecting means does not detect the specified signal.

6. The transmission apparatus according to claim 1, further comprising first coding means (25A) for coding the input signal consisting of one of the speech signal and the voice band data signal in a coding mode of a predetermined first quality; and second coding means (25) for coding the input signal in a coding mode of a second quality lower than the first quality, wherein
said transmitting means transmits a signal coded by said first coding means as the transmission signal when said specified signal detecting means detects the specified signal, and transmits a signal coded by said second coding means as the transmission signal when said specified signal detecting means does not detect the specified signal.

7. The transmission apparatus according to claim 1, further comprising a receiving-side apparatus (12) for receiving a transmission signal from the opposite side equipment, and for converting the transmission signal into an original input signal to be output as an output signal, wherein
said specified signal detecting means and said transmitting means constitute a transmitting-side apparatus (11).

8. The transmission apparatus according to claim 7, further comprising message transmitting means (27) for transmitting to the opposite side equipment a message indicating a request for switching the quality of the transmission signal; and message receiving means (31) for receiving from the opposite side equipment a message indicating a request for switching the quality of the transmission signal, wherein
said transmitting means switches, when said message receiving means receives the message, the quality of the transmission signal to be sent to the opposite side equipment into the quality specified by the message.

9. The transmission apparatus according to claim 7, further comprising detected information transmitting means (23) for detecting the specified signal, and for transmitting detected information to the opposite side equipment when the specified signal is detected; and detected information receiving means (32) for receiving corresponding detected information from the opposite side equipment, wherein
said transmitting means switches the quality of the transmission signal to be sent to the opposite side equipment, when said detected information receiving means receives the detected information.

10. The transmission apparatus according to claim 1, further comprising an activity detector (22) for detecting that the channel of the input signal is brought into an inactive state, wherein when said activity detector detects that the channel of the input signal enters the inactive state after said specified signal detecting means detects the specified signal in the input signal, said transmitting means switches the quality of a channel of the transmission signal, which corresponds to the channel of the input signal.

11. The transmission apparatus according to claim 7, further comprising a first activity detector (22) for detecting that the channel of the input signal is brought into an inactive state, and a second activity detector (36) for detecting that a channel of the transmission signal sent from the opposite side equipment is brought into an inactive state, the channel of the transmission signal corresponding to the channel of the input signal, wherein when both said first activity detector and said second activity detector detect the inactive state after said specified signal detecting means detects the specified signal in the input signal, said transmitting means switches the quality of a channel of the transmission signal, which corresponds to the channel of the input signal.

12. The transmission apparatus according to claim 1 or 7, further comprising disconnect detecting means (22, 36, 42, 56) for detecting a disconnect, wherein when said disconnect detecting means detects the disconnect after said specified signal detecting means detects the specified signal in the input signal and said transmitting means switches the quality of the transmission signal that corresponds to the channel of the input signal into the quality in which the transmission signal is transmitted when the specified signal is detected, said transmitting means switches the quality of the transmission signal into the quality in which the transmission signal is transmitted when the specified signal is not detected.

13. The transmission apparatus according to claim 12, wherein said disconnect detecting means (22) makes a decision that it detects the disconnect when the channel of the input signal continues the inactive state for more than a predetermined time period.

14. The transmission apparatus according to claim 12, wherein said disconnect detecting means (22, 36) makes a decision that it detects the disconnect when the channel of the input signal continues the inactive state for more than a predetermined time period, and when the transmission signal from the opposite side equipment corresponding to the channel of the input signal is in the inactive state.

15. The transmission apparatus according to claim 12, wherein said disconnect detecting means (42, 56) detects the disconnect by monitoring a transmission and reception protocol of one of a facsimile signal and a data-modem signal received as the input signal, and one of a facsimile signal and a data-modem signal received from the opposite side equipment as the transmission signal corresponding to the input signal.

16. The transmission apparatus according to claim 7, wherein said receiving-side apparatus further comprises specified signal detecting means (37) for detecting a specified signal in a prescribed startup procedure from an output signal of said receiving-side apparatus.

17. The transmission apparatus according to claim 7, wherein said transmitting means transmits the input signal consisting of a facsimile signal from a calling side to a called side to the opposite side equipment in a predetermined first quality, and transmits the facsimile signal from the called side to the calling side to the opposite side equipment at a second quality lower than the first quality.

18. The transmission apparatus according to claim 1, further comprising new call connection detecting means (29) for detecting a new call connection, wherein when said new call connection detecting means detects the new call connection after said specified signal detecting means detects the specified signal in the input signal and said transmitting means switches the quality of the transmission signal corresponding to the channel of the input signal into the quality in which the transmission signal is transmitted when the specified signal is detected, said transmitting means switches the quality of the transmission signal into the quality in which the transmission signal is transmitted when the specified signal is not detected.

19. The transmission apparatus according to claim 18, wherein said new call connection detecting means comprises second tone signal detecting means (29) for detecting from the input signal a tone signal of a specified frequency used for a channel continuity test, and makes a decision that it detects the new call connection when said second tone signal detecting means detects the tone signal.

20. The transmission apparatus according to claim 18, wherein said new call connection detecting means comprises third tone signal detecting means (29) for detecting one of a CNG signal and a CED signal from the input signal, and makes a decision that it detects the new call connection when said third tone signal detecting means detects one of the CNG signal and the CED signal.

21. The transmission apparatus according to claim 18, wherein said new call connection detecting means comprises fourth tone signal detecting means (29) for detecting from the input signal a tone signal of a specified frequency based on No.5 signaling, and makes a decision that it detects one of the new call connection and disconnect when said fourth tone signal detecting means detects the tone signal.

22. The transmission apparatus according to claim 1, wherein said transmitting means comprises a cell assembler (61) for assembling the input signal into an ATM cell to be transmitted as the transmission signal when said specified signal detecting means detects the specified signal.

23. The transmission apparatus according to claim 1, wherein said transmitting means comprises an IP packet assembler (62) for assembling the input signal into an IP packet to be transmitted as the transmission signal when said specified signal detecting means detects the specified signal.

24. The transmission apparatus according to claim 1, wherein said transmitting means comprises a cell assembler (61A) for assembling the input signal into an ATM cell to be transmitted as the transmission signal.

25. The transmission apparatus according to claim 1, wherein said transmitting means comprises an IP packet assembler (62A) for assembling the input signal into an IP packet to be transmitted as the transmission signal.
